(19) Europäisches Patentamt
European Patent Office
Office européen des brevets

(11) Veröffentlichungsnummer: **0 045 278**
**B1**

(12) # EUROPÄISCHE PATENTSCHRIFT

(45) Veröffentlichungstag der Patentschrift: **19.09.84**

(51) Int. Cl.³: **C 09 B 62/20,** D 06 P 3/66

(21) Anmeldenummer: **81810289.9**

(22) Anmeldetag: **16.07.81**

(54) **Reaktivfarbstoffe, deren Herstellung und Verwendung.**

(30) Priorität: **22.07.80 CH 5585/80**

(43) Veröffentlichungstag der Anmeldung: **03.02.82 Patentblatt 82/5**

(45) Bekanntmachung des Hinweises auf die Patenterteilung: **19.09.84 Patentblatt 84/38**

(84) Benannte Vertragsstaaten: **CH DE FR GB LI**

(56) Entgegenhaltungen: **FR - A - 2 390 478**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Seitz, Karl, Dr., Schützenweg 9, CH-4104 Oberwil (CH)**
Erfinder: **Hoegerle, Karl, Dr., St. Albananlage 19, CH-4052 Basel (CH)**

**EP 0 045 278 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Reaktivfarbstoffe sind bis heute in großer Zahl bekannt geworden. Jedoch lassen deren applikatorische Eigenschaften, insbesondere deren Anwendbarkeit für verschiedene Färbeverfahren vielfach zu wünschen übrig. Es bestand daher die Aufgabe, neue Reaktivfarbstoffe mit applikatorisch größerer Anwendungsbreite zu finden. Es hat sich gezeigt, daß die weiter unten definierten neuen Reaktivfarbstoffe diese Aufgabe weitgehend erfüllen.

Gegenstand der Erfindung sind somit Reaktivfarbstoffe der Formel

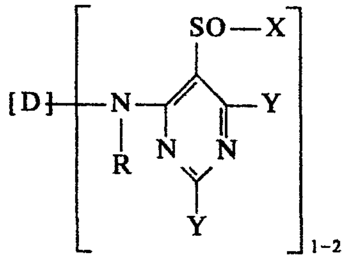

(1)

worin D der Rest eines sulfogruppenhaltigen Farbstoffes der Mono- oder Polyazo-, Metallkomplexazo-, Anthrachinon-, Phthalocyanin, Formazan-, Azomethin-, Nitroaryl-, Dioxazin-, Phenazin- oder Stilbenreihe, R Wasserstoff oder gegebenenfalls substituiertes $C_1-C_4$-Alkyl, X-$C_1-C_4$-Alkyl, ein Y Fluor, Chlor oder Brom und das andere Y Fluor, Chlor, Brom oder ein Amino-, Alkoxy-, Aryloxy-, Alkylthio- oder Arylthiorest ist, wobei die aufgeführten Reste gegebenenfalls substituiert sind.

Wichtige Untergruppen der Reaktivfarbstoffe der Formel (1) sind

a) Reaktivfarbstoffe, worin D, R und X die unter Formel (1) angegebenen Bedeutungen haben, und beide Y Chloratome sind.

b) Reaktivfarbstoffe der Formel

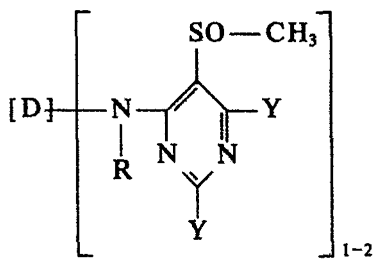

(2)

worin D, R und Y die unter Formel (1) angegebenen Bedeutungen haben.

c) Reaktivfarbstoffe der Formel (2), worin D und R die unter Formel (2) angegebenen Bedeutungen haben, und beide Y Chroratome sind.

d) Reaktivfarbstoffe der Formel (2), worin D der Rest eines Mono- oder Disazofarbstoffes ist.

e) Reaktivfarbstoffe der Formel (2), worin D der Rest eines Metallkomplexazo- oder Formazanfarbstoffes ist.

f) Reaktivfarbstoffe gemäß Formel (2), worin D der Rest eines Metallkomplexazofarbstoffes der Benzol- oder der Naphthalinreihe ist.

g) Reaktivfarbstoffe gemäß Formel (2), worin D der Rest eines 1 : 1-Kupferkomplexazofarbstoffes ist, und das Metallatom an jeweils eine metallisierbare Gruppe in ortho-Position zur Azobrücke gebunden ist.

Bevorzugt sind insbesondere

h) Reaktivfarbstoffe der Formel

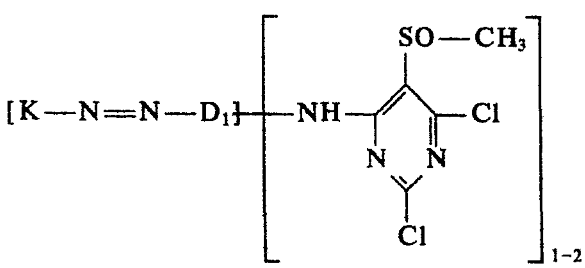

(3)

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und der Reaktivrest an die Diazokomponente oder an die Kupplungskomponente gebunden ist, oder je ein Reaktivrest sowohl an die Daizokomponente als auch an die Kupplungskomponente gebunden ist.

Bevorzugt sind ferner

i) Reaktivfarbstoffe der Formel

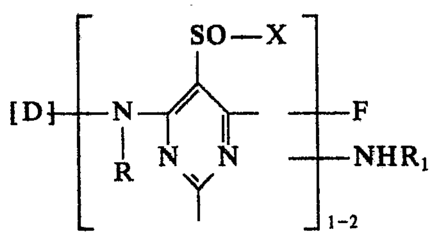

(4)

worin D, R und X die Formel (1) angegebenen Bedeutungen haben, und $R_1$ Wasserstoff oder gegebenenfalls substituiertes Alkyl, Cycloalkyl, Aralkyl oder Aryl ist.

j) Reaktivfarbstoffe der Formel (4), worin D der Rest eines Mono- oder Disazofarbstoffes ist.

k) Reaktivfarbstoffe der Formel

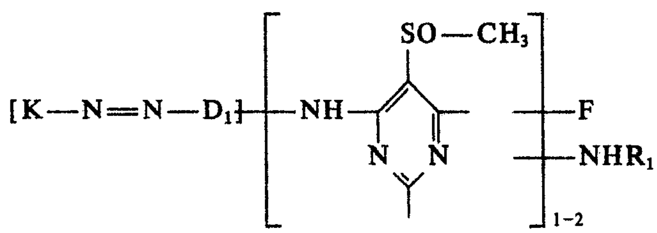

(5)

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes Alkyl, Cycloalkyl, Aralkyl oder Aryl ist und der Reaktivrest an die Diazokomponente oder an die Kupplungskomponente oder aber je ein Reaktivrest sowohl an die Diazokomponente als auch an die Kupplungskomponente gebunden ist.

Ein besonders wertvoller Farbstoff ist der Reaktivfarbstoff der Formel

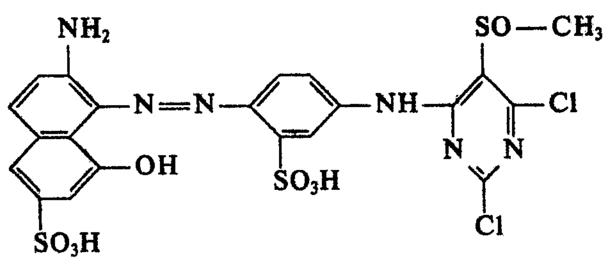

(6)

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen, mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetlyamino und Propionylamino. Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Äthyl, Methoxy, Benzoylamino, Amino, Ureido, Sulfomethyl, Hydroxy und Sulfo.

Als Alkylrest kommt für R in Formel (1) ein geradkettiger oder verzweigter Alkylrest in Betracht, der auch substituiert sein kann, z. B. durch Halogen, Hydroxy oder Cyan. Als Beispiele für R seien genannt: Methyl, Äthyl, Propyl, Isopropyl, Butyl, Isobutyl, sek.-Butyl, tert.-Butyl und $\beta$-Hydroxybutyl.

Der Rest X ist Methyl, Äthyl, Propyl, Isopropyl, Butyl, Isobutyl, sek.-Butyl und tert.-Butyl. Vor allem ist X die Methylgruppe.

Falls ein Y ein Amino-, Alkoxy-, Aryloxy-, Alkythio- oder Arylthiorest ist, kommen z. B. die folgenden Reste in Betracht, als Aminogruppe: $-NH_2$, Hydroxylamino, Hydrazino, Phenylhydrazino, Sulfophenylhydrazino, Methylamino, Äthylamino, Propylamino, Isopropylamino, Butylamino, $\beta$-Methoxyäthylamino, $\gamma$-Methoxypropylamino, N,N-Dimethylamino, N,N-Diäthylamino, N-Methyl-N-phenylamino, N-Äthyl-N-phenylamino, $\beta$-Chloräthylamino, $\beta$-Hydroxyäthylamino, $\gamma$-Hydroxypropylamino, Benzylamino, Cyclohexylamino, Morpholino, Piperidino, Piperazino, und vor allem aromatische Aminogruppen, wie Phenylamino, Toluidiono, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl(1)-amino, 3,6-Disulfonaphthyl(1)-amino, 3,6,8-Trisulfonaphthyl(1)-amino und 4,6,8-Trisulfonaphthyl(1)-amino; als Alkoxygruppe: Methoxy, Äthoxy, Propyloxy, Isopropyloxy, Butyloxy, $\beta$-Methoxyäthoxy, $\beta$-Äthoxyäthoxy, $\gamma$-Methoxypropoxy, $\gamma$-Äthoxypropoxy, $\gamma$-Propoxypropoxy, $\gamma$-Isopropoxypropoxy; als Aryloxygruppe: Phenoxy, 4-Methylphenoxy, 3-Hydroxyphenoxy, 2-Carboxyphenoxy, 4-Carboxyphenoxy, 2-, 3- und 4-Sulfophenoxy, 1-Naphthyloxy, 2-Naphthyloxy, 4-Sulfo-1-naphthyloxy, 1-Methyl-2-naphthyloxy, 3-Carboxy-2-naphthyloxy, 6-Sulfo-2-naphthyloxy, 3,6-Disulfo-2-naphthyloxy; als Alkylthiogruppe: Methylthio und Äthylthio; als Arylthiogruppe: Phenylthio, 1-Naphthylthio und 2-Naphthylthio.

Die Farbstoffe der Formel (1) sind faserreaktiv, da sie in dem Pyrimidinrest 1 bis 2 abspaltbare Halogentaome enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, daß man organische Farbstoffe der Formel

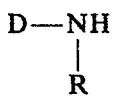 (7)

oder Farbstoffvorprodukte mit mindestens einem Äquivalent einer Verbindung der Formel

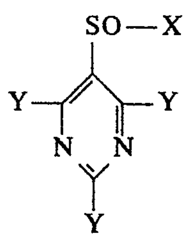 (8)

wobei D, R, X und Y in den Formeln (7) und (8) die unter Formel (1) angegebenen Bedeutungen haben, und, falls alle drei Y in Formel (8) Fluor, Chlor oder Brom sind, gegebenenfalls mit einem Amin, einem Alkohol einer aromatischen Hydroxyverbindung, einem Alkyl- oder Arylmercaptan zu einem Reaktivfarbstoff der Formel (1) kondensiert, und daß man im Falle der Verwendung von Farbstoffvorprodukten, diese in die gewünschten Endprodukte umwandelt.

Falls man von Farbstoffvorprodukten ausgeht, gelangt man zu den Reaktivfarbstoffen der Formel (1), indem man eine Komponente des Farbstoffes der Formel (7), die eine

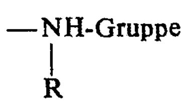

enthält, eine Verbindung der Formel (8), und gegenenfalls ein Amin, einen Alkohol, eine aromatische Hydroxyverbindung, ein Alky-l- oder Arylmercaptan kondensiert, und in einer beliebigen Stufe des Verfahrens mit der anderen Komponente des Farbstoffes der Formel (7) umsetzt.

Vorzugsweise verwendet man als Ausgangsstoffe Verbindungen der Formel (8), worin alle drei Y Chloratome sind.

Die bevorzugten Reaktivfarbstoffe der Formel (2) werden hergestellt, indem man organische Farbstoffe der Formel (7) mit mindestens einem Äquivalent einer Verbindung der Formel

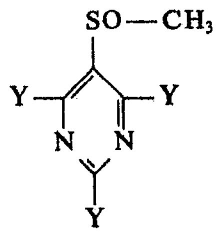

(9)

worin Y die unter Formel (1) angegebenen Bedeutungen hat, und, falls alle drei Y Fluor, Chlor oder Brom sind, gegebenenfalls mit einem Amin, einem Alkohol, einer aromatischen Hydroxyverbindung, einem Alkyl- oder Arylmercaptan kondensiert.

Vorzugsweise kondensiert man mit einer Verbindung der Formel

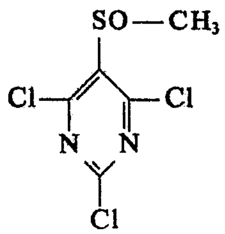

(10)

Vorzugsweise verwendet man ferner Verbindungen der Formel (7), worin D der Rest eines Mono- oder Disazofarbstoffes ist.

Nach der oben beschriebenen Verfahrensvariante, bei welcher man von Farbstoffvorprodukten ausgeht, können die Farbstoffe der Formel (1), worin D der Rest eines aus zwei oder mehr als zwei Komponenten zusammengesetzten organischen Farbstoffes ist, in der Weise hergestellt werden, daß man eine Komponente des Farbstoffes der Formel (7), die eine

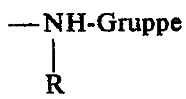

enthält, eine Verbindung der Formel (8) und gegebenenfalls eine Amino-, Hydroxy- oder Mercaptoverbindung kondensiert, und in einer beliebigen Stufe des Verfahrens mit der anderen (bzw. den übrigen) Komponente(n) des Farbstoffes der Formel (7) zu einem Farbstoff der Formel (1) umsetzt.

Beispiele für derartige, aus zwei oder mehr als zwei Komponenten zusammengesetzte organische Farbstoffe sind: Monoazo-, Disazo-, Trisazo-,Tetrazo-, Metallkomplex-, Formazan- und Azomethinfarbstoffe.

Die oben beschriebenen Verfahrensvariante ist vor allem wichtig für die Herstellung von Farbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei Varianten der oben beschriebenen Verfahrensabänderung.

Die eine der beiden Varianten ist dadurch gekennzeichnet, daß man eine Diazokomponente des Farbstoffes, die eine

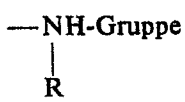

enthält mit einer Verbindung der Formel (8), worin zwei Y Fluor, Chlor oder Brom sind und das dritte Y Fluor, Chlor, Brom oder gegebenenfalls substiuiertes Amino, Alkoxy, Aryloxy, Alkythio oder Arylthio ist, kondensiert, das erhaltene Kondensationsprodukt diazotiert und auf eine Kupplungskomponente kuppelt.

Die zweite Variante ist dadurch gekennzeichnet, daß man eine Kupplungskomponente des Farbstoffes, die eine

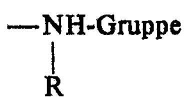

enthält mit einer Verbindung der Formel (8), worin zwei Y Fluor, Chlor oder Brom sind, und das dritte Y Fluor, Chlor, Brom oder gegebenenfalls substituiertes Amino, Alkoxy, Aryloxy, Alkylthio oder Arylthio

ist, kondensiert, und auf das so erhaltene Kondensationsprodukt eine diazotierte Diazokomponente kuppelt.

Nach dieser Herstellungsvariante können Reaktivfarbstoffe der Formel (1), die zwei Reaktivreste enthalten, hergestellt werden, indem man ein Diazokomponente, die eine

$$-\underset{\displaystyle R}{\underset{|}{N}}H\text{-Gruppe}$$

enthält, mit einer Verbindung der Formel (8), worin zwei Y Fluor, Chlor oder Brom sind und das dritte Y Fluor, Chlor, Brom oder gegebenenfalls substituiertes Amino, Alkoxy, Aryloxy, Alkylthio oder Arylthio ist, kondensiert, daß man ferner eine Kupplungskomponente, die eine

$$-\underset{\displaystyle R}{\underset{|}{N}}H\text{-Gruppe}$$

enthält, mit einer Verbindung der Formel (8), worin zwei Y Fluor, Chlor oder Brom sind und das dritte Y Fluor, Chlor, Brom oder gegebenenfalls substituiertes Amino, Alkoxy, Aryloxy, Alkylthio oder Arylthio ist, kondensiert, und daß man das Kondensationsprodukt der Diazokomponente diazotiert und auf das Kondensationsprodukt der Kupplungskomponente kuppelt, wobei R und Y im Kondensationsprodukt der Diazokomponente unabhängig ist von R und Y im Kondensationsprodukt der Kupplungskomponente.

Farbstoffe, die zwei oder mehr als zwei Reaktivreste enthalten, sind auch in der Weise herstellbar, daß man Farbstoffe der Formel (7), die in D weitere

$$-\underset{\displaystyle R}{\underset{|}{N}}H\text{-Gruppen}$$

enthalten, mit einer entsprechenden Menge des Acylierungsmittels der Formel (8) kondensiert, so daß zwei oder mehr als zwei entsprechende Reste in das Farbstoffmolekül eingeführt werden.

Eine bevorzugte Ausführungsform ist dadurch gekennzeichnet, daß man organische Farbstoffe der Formel

$$[K-N=N-D_1]\!-\![NH_2]_{1-2} \qquad (11)$$

worin $D_1$ der Rest einer Diazokomponente der Benzol- oder Napthalinreihe und K der Rest einer Kupplungskomponente der Benzol- oder Naphthalinreihe oder der heterocyclischen Reihe ist, mit einer Verbindung der Formel (10) kondensiert, wobei die Kondensation an der $NH_2$-Gruppe der Diazokomponente oder an der $NH_2$-Gruppe der Kupplungskomponente erfolgt, oder mit zwei Verbindungen der Formel (10) kondensiert, wobei die Kondensation an der $NH_2$-Gruppe der Diazokomponente und an der $NH_2$-Gruppe der Kupplungskomponente erfolgt.

Nach einer weiteren bevorzugten Herstellungsweise verwendet man Verbindungen der Formel (7), worin D der Rest eines Metallkomplexazo- oder Formazanfarbstoffes ist.

Ein Verfahren zur Herstellung von Reaktiv-Metallkomplexazofarbstoffen ist dadurch gekennzeichnet, daß man Verbindungen der Formel (7), worin D der Rest eines Azofarbstoffes der Benzol- oder Naphthalinreihe ist, der metallisierbare Gruppen in ortho-Position zur Azobrücke enthält, mit einer Verbindung der Formel (9), worin zwei Y Fluor, Chlor oder Brom sind und das dritte Y Fluor, Chlor, Brom oder gegebenenfalls substituiertes Amino, Alkoxy, Aryloxy, Alkythio oder Arylthio ist, und mit schwermetallabgebenden Mitteln in beliebiger Reihenfolge umsetzt.

Bevorzugt ist ein Verfahren, nach dem man einen Monoazofarbstoff der Benzol- oder Naphthalinreihe, der in ortho-Position zur Azobrücke metallisierbare Gruppen enthält, mit einer Verbindung der Formel (10) und mit kupferabgebenden Mitteln in beliebiger Reihenfolge zu einem 1 : 1-Kupferkomplexazofarbstoff umsetzt.

Die bevorzugten Reaktivfarbstoffe der Formel (4) werden herstellt, indem man organische Farbstoffe der Formel

$$D-\underset{\displaystyle R}{\underset{|}{N}}H \qquad (7)$$

oder Farbstoffprodukte, Verbindungen der Formel

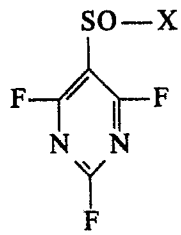

(12)

und Amine der Formel

$$H_2N-R_1 \quad (13)$$

in beliebiger Reihenfolge miteinander umsetzt, und daß man im Falle der Verwendung von Farbstoffvorprodukten, diese in die gewünschten Endfarbstoffe umwandelt.

Insbesondere verwendet man dabei Verbindungen der Formel (7), worin D der Rest eines Mono- oder Disazofarbstoffes ist.

In der gleichen Weise wie oben für die Reaktivfarbstoffe der Formel (4) beschrieben, können auch die ebenfalls bevorzugten Reaktivfarbstoffe der Formel (5) hergestellt werden.

Die als Ausgangsstoffe verwendeten Farbstoffe der Formel (7) können im Rest D wie weiter vorn beschrieben substitiuiert sein. Vorzugsweise geht man von organischen Farbstoffen der Formel (7) aus, worin D der Rest eines Azofarbstoffes ist, der als Substituenten Methyl, Äthyl, Methoxy, Benzoylamino, Amino, Ureido, Sulfomethyl, Hydroxy und Sulfo enthalten kann.

Der wertvolle Reaktivfarbstoff der Formel (6) wird in der Weise hergestellt, daß man den durch Kupplung von diazotierter 1-Amino-4-acetlyaminobenzol-6-sulfonsäure auf 2-Amino-8-hydroxynaphthalin-6-sulfonsäure und anschließende Verseifung der Acetylaminogruppe erhaltenen Azofarbstoffe mit 2,4,6-Trichlor-5-methylsulfinylpyrimidin kondensiert.

Falls in einem Reaktivfarbstoff der Formel (1) einer der beiden Substituenten Y ein Amino-, Alkoxy-, Aryloxy-, Alkylthio- oder Arylthiorest ist, kann dieser vor oder nach der Kondensation einer Verbindung der Formel (8) mit einem organischen Farbstoff der Formel (7) in den Pyrimidinrest eingeführt werden. Diese Einführung geschieht durch Kondensation mit einem Amin oder einer Hydroxy- oder einer Mercaptoverbindung, wobei ein Halogenatom am Pyrimidinkern durch einen entsprechenden Amino-, Alkoxy-, Aryloxy-, Alkylthio- und Arylthiorest, z. B. einem der weiter vorn genannten, ersetzt wird.

Bei dem im vorangehenden beschriebenen Verfahren können die einzelnen Verfahrensschritte in unterschiedliche Reihenfolge, gegebenenfalls teilweise auch gleichzeitig ausgeführt werden. Dabei sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten frei gewählt werden kann.

Wenn man, wie weiter oben beschrieben, ein Halogenatom Y in der Verbindung der Formel (8) vor oder nach der Kondensation mit dem Farbstoff der Formel (7) oder einem Farbstoffvorprodukt, durch Kondensation mit einem Amin gegen eine Aminogruppe austauscht, und man als Amin für diesen Zweck wiederum einen Farbstoff der Formel (7) verwendet, so erhält man einen Farbstoff, der zwei über den Rest eines 5-Alkylsuflinypyrimidins miteinander verbundene Farbstoffreste enthält; die letzteren können gleich oder verschieden sein.

Ersetzt man ein Halogenatom in der Verbindung der Formel (8) vor oder nach der Kondensation mit einem Farbstoff der Formel (7) bzw. (siehe oben) mit zwei Farbstoffen der Formel (7), so ergeben sich, da die Reihenfolge der Teilreaktionen frei gewählt werden kann, mehrere Verfahrensvarianten.

Ferner kann man in einen Farbstoff der Formel (7) oder ein Farbsroffvorprodukt einen 5-Alkylsulfinyl-pyrimidinrest einführen, ein Halogenatom Y durch Kondensation mit einem Alkylen- oder Arylendiamin gegen einen Alky- oder Arylrest, der noch eine freie Aminogruppe enthält, austauschen, und die freie Aminogruppe mit einem faserreaktiven Acylierungsmittel, z. B. einer Verbindung der Formel (8), kondensieren, so daß Farbstoffe entstehen, welche zwei über einen farblosen Alkylen oder Arylenrest miteinander verbundene Reaktivreste enthalten. Auch hier sind verschiedene Verfahrensvarianten möglich.

Geht man, wie weiter vorn beschrieben, nicht von einem organischen Farbstoff der Formel (7) sondern von dessen Komponenten, z. B. von der Diazo- und Kupplungskomponente aus, so wird die Zahl der möglichen Ausführungsvarianten (Reaktionsfolgen) noch größer. Diese lassen sich aber aufgrund der gegebenen Beschreibung ohne weiteres angeben.

Die Kondensationen der Verbindungen der Formel (8) mit den organischen Farbstoffen der Formel (7) bzw. den eine

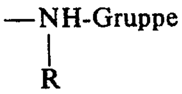

enthaltenden diazotierbaren und/oder kupplungsfähigen Komponenten und gegebenenfalls Aminen, Wasser, Alkoholen, aromatischen Hydroxyverbindungen oder aliphatischen oder aromatischen Thiolverbindungen erfolgen vorzugsweise in wäßriger Lösung oder Suspension, bei niedriger Temperatur und bei schwach saurem, neutralem bis schwach alkalischem pH-Wert, und so daß im fertigen Farbstoff der Formel (1) noch mindestens ein Y als abspaltbarer Rest übrigbleibt. Vorteilhaft wird der bei der Kondensation freiwerdende Fluor-, Chlor- oder Bromwasserstoff laufend durch Zugabe wäßriger Alkalihydroxyde, -carbonate oder -bicarbonate neutralisiert.

Als Ausgangsstoffe zur Herstellung der Reaktivfarbstoffe der Formel (1) seien genannt:

a) organische Farbstoffe der Formel (7)

1. Monoazoverbindungen der Formel

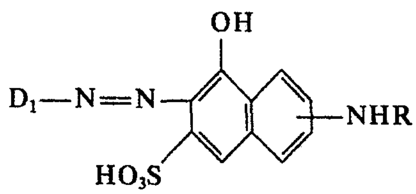
(14)

worin $D_1$ einen höchstens bicyclischen, von Azo- und —NHR-Gruppen freien Arylrest bedeutet, R Wasserstoff oder Alkyl ist, und die —NHR-Gruppe vorzugsweise an die 1-, 2-, 3- oder 4-Stellung des Naphthalinkernes gebunden ist, und welche zusätzlich eine Sulfonsäuregruppe in 5- oder 6-Stellung des Naphthalinkernes enthalten können.

$D_1$ kann dabei einen Rest der Naphthalin- oder Benzolreihe bedeuten, welcher keine Azosubstituenten enthält, beispielsweise einen Stilben-, Diphenyl-, Benzthiazolylphenyl- oder Diphenylaminrest. In dieser Klasse sind auch die verwendeten Farbstoffe zu beachten, in welchen die —NHR-Gruppe, statt an den Naphthalinkern gebunden zu sein, an eine an die 1-, 2-, 3- oder 4-Stellung des Naphthalinkerns gebundene Benzoylamino- oder Anilinogruppe gebunden ist.

Besonders wertvolle Ausgangsfarbstoffe sind jene, worin $D_1$ einen sulfonierten Phenyl- oder Naphthylrest bedeutet, insbesondere diejenigen, welche eine $-SO_3H$-Gruppe in o-Stellung zur Azobindung enthalten; der Phenylrest kann weitersubstituiert sein, beispielsweise durch Halogenatome, wie Chlor, Alkylreste, wie Methyl, Acylaminogruppen, wie Acetylamino, und Alkoxyradikale, wie Methoxy.

2. Disazoverbindungen der Formel (14), worin D1 einen Rest der Azobenzol-, Azonaphthalin- oder Phenylazonaphthalinreihe bedeutet und der Naphthalinkern durch die —NHR-Gruppe und gewünschtenfalls durch Sulfo, wie in Klasse 1, substiuiert ist.

3. Monoazoverbindungen der Formel

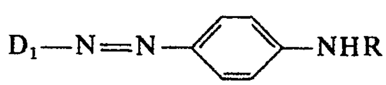
(15)

worin $D_1$ einen höchstens bicyclischen Arylrest, wie in der Klasse 1 beschrieben und vorzugsweise einen Disulfonaphthyl- oder Stilbenrest bedeutet, R Wasserstoff oder Alkyl ist, und der Benzolkern weitere Substituenten, wie Halogentaome oder Alkyl-, Alkoxy-, Carbonsäure-, Ureido- und Acylaminogruppen enthalten kann.

4. Mono- oder Disazoverbindungen der Formel

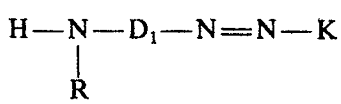
(16)

worin $D_1$ einen Arylenrest, z. B. einen Rest der Azobenzol-, Azonaphthalin- oder Phenylazonaphthalinreihe, oder vorzugsweise einen höchstens bicyclischen Arylenrest der Benzol- oder Naphthalinreihe und K den Rest einer Naphtholsulfonsäure oder den Rest einer enolisierten oder enolisierbaren Kethomethylverbindung (wie ein Acetoacetarylid oder ein 5-Pyrazolon) mit der OH-Gruppe in o-Stellung zur Azogruppe bedeuten, und R Wasserstoff oder Alkyl ist. $D_1$ bedeutet vorzugsweise einen Rest der Benzolreihe, der eine Sulfonsäuregruppe enthält.

5. Mono- oder Disazoverbindungen der Formel

$$D_1 - N = N - K_1 - NHR \quad (17),$$

worin $D_1$ einen Rest der für $D_1$ in den Klassen 1 und 2 oben definierten Typen und $K_1$ den Rest einer enolisierbaren Ketomethylenverbindung (wie ein Acetoacetarylid oder ein 5-Pyrazolon) mit der OH-Gruppe in ortho-Stellung zur Azogruppe bedeuten.

6. Die Metallkomplexverbindungen, z. B. die Kupfer-, Chrom- und Kobaltkomplexe, der Farbstoffe der Formeln (14) bis (17), worin $D_1$, K und $K_1$ die jeweils angegebenen Bedeutungen haben und ferner eine metallisierbare Gruppe (beispielsweise eine Hydroxyl-, niedrigere Alkoxy- oder Carbonsäuregruppe) in ortho-Stellung zur Azogruppe in $D_1$ vorhanden ist.

Besonders wichtige Azofarbstoffe, die zur Herstellung der Farbstoffe der Formel (1) verwendet werden können, sind die Azofarbstoffe der Formeln

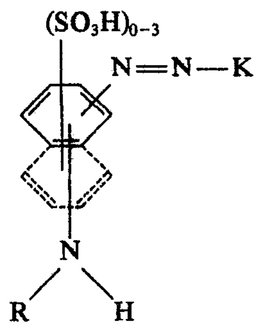

(18)

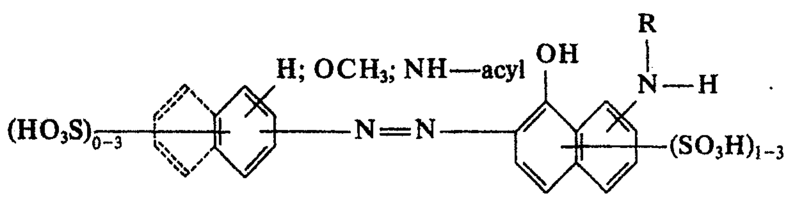

(19)

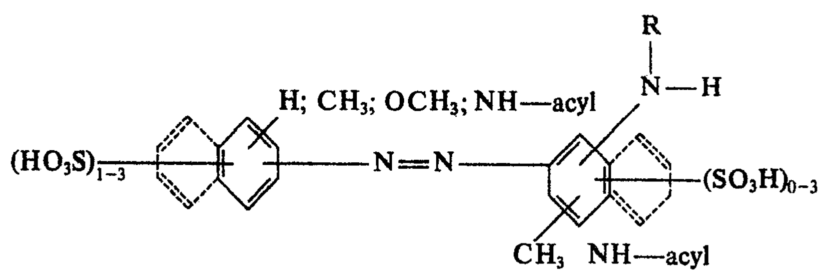

(20)

worin K der Rest einer Kupplungskomponente der Benzol-, Naphthalin- oder der heterocyclischen Reihe, acyl ein niedrigmolekularer, höchstens 3 Kohlenstoffatome enthaltender aliphtischer Acylrest oder ein höchstens 8 Kohlenstoffatomen enthaltender aromatischer Rest ist, und R die bei der Erläuterung der Formel (1) angegebene Bedeutung hat, sowie die Metallkomplex-Azofarbstoffe der Formeln

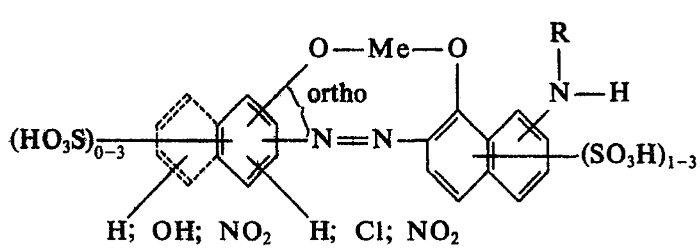

(21)

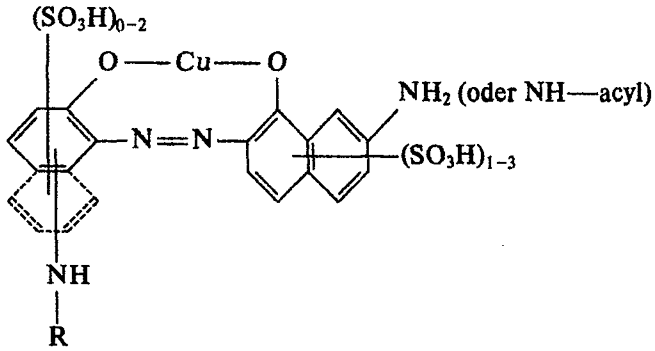

(22)

worin R und acyl die bei der Erläuterung der Formeln (18), (19) und (20) angegebenen Bedeutungen haben und Me für Cu, Cr oder Co steht.

7. Anthrachinonverbindungen, welche eine Gruppe der Formel —NHR, worin R Wasserstoff oder Alkyl ist, an eine Alkylamino- oder Arylaminogruppe, welche selbst an die $\alpha$-Stellung des Anthrachinonkerns gebunden ist, enthalten, insbesondere der Formel

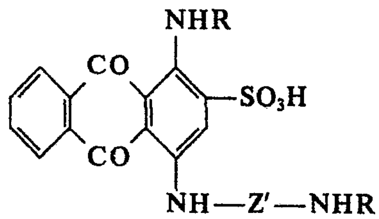

(23)

worin der Anthrachinonkern eine zusätzliche Sulfonsäuregruppe in der 5-, 6-, 7- oder 8-Stellung enthalten kann und Z' ein Brückenglied bedeutet, welches vorzugsweise ein zweiwertiger Rest der Benzolreihe ist, beispielsweise ein Phenylen-, Diphenylen- oder 4,4'-Stilben- oder Azobenzolrest. Vorzugsweise sollte Z' eine Carbonsäure- oder Sulfonsäuregruppe für jeden vorliegenden Benzolring enthalten.

8. Phthalocyaninverbindungen der Formel

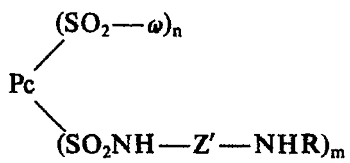

(24)

worin Pc einen Phthalocyaninkern, vorzugsweise Kupferphthalocyanin, $\omega$ —OH und/oder —$NH_2$, Z' ein Brückenglied, vorzugweise eine aliphatische, cycloaliphatische oder aromatische Brücke bedeuten, und n und m jedes 1, 2 oder 3 bedeuten und gleich oder verschieden sein können, vorausgesetzt, daß n + m nicht größer als 4 ist.

Die Farbstoffverbindungen der Phthalocyaninreihe, welche als Ausgangsstoffe verwendet werden können, sind vorzugsweise metallhaltige Phthalocyanine, wie Kupferphthalocyanine, welche wenigstens eine wasserlöslichmachende Gruppe, wie eine Sulfonsäuregruppe, und wenigstens eine Gruppe der Formeln —NHR, worin R Wasserstoff oder Alkyl ist, enthalten. Die —NHR-Gruppe oder -Gruppen können direkt oder über eine zweiwertige Brücke an die Benzolringe des Phthalocyaninkerns gebunden sein, beispielsweise über eine -Phenylen-, —CO-Phenylen-, —$SO_2$-Phenylen, —NH-Phenylen, —S-Phenylen-, —O-Phenylen-, —$CH_2$S-Phenylen, —$CH_2$O-Phenylen-, —$CH_2$-Phenylen-, —$SCH_2$-Phenylen-, —$SO_2CH_2$-Phenylen, —$SO_2NR_1$-Phenylen, —$CH_2$-, —$SO_2NR_1$-Arylen-, —$NR_1$CO-Phenylen-, —$NR_1SO_2$-Phenylen-, —$SO_2$O-Phenylen-, —$CH_2NR_1$-Phenylen-, —$CH_2$NH-CO-Phenylen-, —$SO_2NR_1$-Alkylen-, —$CH_2NR_1$-Alkylen-, —$CONR_1$-Phenylen-, —$CONR_1$-Arylen, —$SO_2$- oder eine —CO-Brücke. In den oben genannten zweiwertigen Brückengliedern bedeutet $R_1$ Wasserstoff, Alkyl oder Cycloalkyl, Arylen einen zweiwertigen aromatischen, gegebenenfalls z. B. durch Halogen, Alkyl oder Alkoxy substiuierten Rest, worin die endständigen Bindungen an gleiche oder verschiedene Kerne gebunden sein können, und Alkylen einen zweiwertigen aliphatischen Rest, welcher Heteroatome, wie Stickstoff, in der Atomkette einschließen kann, beispielsweise den Rest —$CH_2CH_2$—NH—$CH_2CH_2$—.

Als Beispiele von solchen zweiwertigen aromatischen Resten, die durch Arylen bezeichnet werden, seien erwähnt:
aromatische Kerne, beispielsweise ein Benzol-, Naphthalin-, Acridin- und Carbazolkern, welche weitere Substituenten tragen können, und Reste der Formel

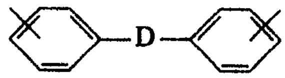 (25)

worin die Benzolringe weitere Substituenten tragen können und —D— eine überbrückende Gruppe bedeutet, beispielsweise

—CH=CH—, —NH—, —S—, —O—, —$SO_2$—, —NO=N—, —N=N—,
—NH—CO—NH—CO—NH—, —O—$CH_2CH_2$—O— oder

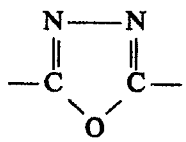 (26)

Es können auch Mischungen von Phthalocyaninen verwendet werden. Beispielsweise kann eine Mischung von ungefähr gleichen Teilen Kupferphthalocayanin-N-(4-amino-3-sulfophenyl)-sulfonamid-trisulfonsäure und Kupferphthalocyanin-di-N-(4-amino-3-sulfophenyl)-sulfonamid-disulfonsäure verwendet werden.

9. Nitrofarbstoffe der Formel

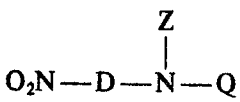 (27)

worin D ein Naphthalin- oder Benzolkern, welcher weitersubstituiert sein kann, ist, das Stickstoffatom N in ortho-Stellung zur Nitrogruppe steht, Z Wasserstoff oder einen gegebenenfalls substituierten Kohlenwasserstoffrest und Q Wasserstoff oder einen an den Stickstoff durch ein Kohlenstoffatom gebundenen organischen Rest bedeutet, und worin Q und Z nicht beide Wasserstoff sind, und Q an Z, wenn Z ein Kohlenwasserstoffrest ist, oder an D in ortho-Stellung zum Stickstoffatom N unter Bildung eines heterocyclischen Ringes gebunden sein kann, und welche wenigstens eine Gruppe der Formel —NHR, worin R Wasserstoff oder Alkyl ist, enthalten; insbesondere Nitrofrabstoffe der Formel

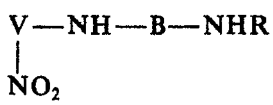 (28)

worin V und B monocyclische Arylkerne bedeuten und die Nitrogruppe in V in ortho-Stellung zur NH-Gruppe steht.

10. Metallkomplexe von Formazanfarbstoffe der Formel

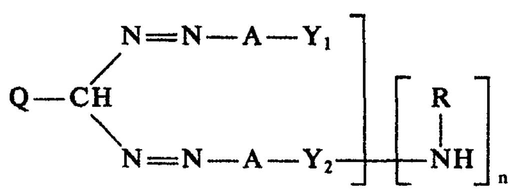 (29)

(n = 1 oder 2)

worin Q ein organischer Rest, eine Nitro- oder Cyanogruppe ist, A und B Reste von Diazokomponenten der Benzol-, Naphthalin- oder hetereocyclischen Reihe und $Y_1$ und $Y_2$ je einen in o-Stellung zur Azogruppe gebundenen, zur Komplexbildung mit einem Schwermetall befähigten Substituenten bedeuten und R die angegebene Bedeutung hat. Der Rest Q ist vor allem ein Rest der Benzolreihe, wie Phenyl oder Sulfophenyl, oder ein niedrigmolekularer Alkylrest, wie Methyl, eine niedrigmolekulare Alkanoylgruppe, eine niedrigmolekulare, vorzugsweise 1 bis 4 Kohlenstoffatome enthaltende Carbalkoxygruppe, eine Benzoylgruppe oder ein hetereocyclischer Rest, und A und B sind vorzugsweise mit Sulfo-, Sulfonamido- oder Alkylsulfonylgruppen substituierte Phenylreste. Als Substituenten $Y_1$ und $Y_2$ kommen vor allem die Hydroxyl- und Carboxylgruppen in Betracht. Geeignete Schwermetalle sind Kupfer, Chrom, Kobalt und Nickel.

Die 5-Alkylsulfinyl-2,4-6-trihalogen-pyrimidine der Formel (8) werden hergestellt, indem man ein 2-Alkylthio-2,4,6-trihalogenpyrimidin der Formel

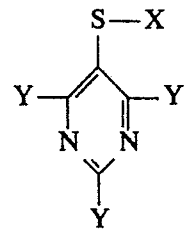

(30)

worin X und Y die gegebenen Bedeutungen haben, mit einem milden Oxidationsmittel oxydiert.

Die als Ausgangsmaterialien benötigten 2-Alkylthio-2,4,6-trihalogen-pyrimidine, sind im J. of Medicinal Chemistry 18, Seite 553 (1975) beschrieben. Beispiele milder Oxydationsmittel sind Peressigsäure, 4-Chlorperbenzoesäure, Perbenzoesäure, Wasserstoffsuperoxid, Natriumperjodat, Perlaurinsäure, Jodbenzodichlorid, N-Chlorsuccinimid, N-Bromsuccinimid. Als Lösungsmittel kommen je nach dem angewendeten Oxidationsmittel, Methylenchlorid, Chloroform, Essigsäure, Wasser etc. in Frage. Die Temperaturen dieser Oxidation liegen zwischen —50°C und +50°C. Ähnliche Oxidationsreaktionen sind beispielsweise in Tetrahedron Letters 1973, Seite 2365 beschrieben, siehe dazu auch »Organic Compounds of Bivalent Sulfur«, Band 2, Seite 64 (Chemical Publishing Co., New York, 1960).

Verbindungen der Formel (8), worin die Y Brom- oder Fluoratome sind, lassen sich auch dadurch herstellen, daß man Verbindungen der Formel (8), worin alle drei Y Chloratome sind, bis zum Ersatz von einem, zwei oder allen drei Chloratomen durch Brom- oder Fluoratome mit einem Bromierungs- oder Fluorierungsmittel, wie Phosphortribromid, wasserfreiem Fluorwasserstoff, Alkalimetallfluoriden oder Kaliumfluorosulfinat, umsetzt.

So können z. B. die Verbindungen der Formel (8), worin die drei Y Chlor bedeuten und X die angegebene Bedeutung hat, in die Brom- oder Fluoranalogen übergeführt werden, indem man 5-Alkylsulfinyl-2,4-6-trichlorpyrimidin, z. B. das 5-Methyl-sulfinyl-2,4,6-trichlorpyrimidin, durch Umsetzung mit Phosphortribromid, das auch als Lösungsmittel dienen kann, in das entsprechende 2,4,6-Tribrompyrimidin überführt, oder indem man die Chlor-Verbindungen durch Umsetzung mit wasserfreiem Fluorwasserstoff, mit Kaliumfluorosulfinat oder einem Alkalimetallfluorid unverdünnt oder in Gegenwart eines hochsiedenden aprotischen organischen Lösungsmittels in die entsprechende 2,4,6-Trifluorverbindung überführt. Geeignete Lösungsmittel für diese Umhalogenierung sind z. B. aromatische Kohlenwasserstoffe, wie Toluol und Xylole; N,N-Dialkylamide von aliphatischen Monocarbonsäuren der vorerwähnten Art, wie N,N-Dimethylformamid und N,N-Dimethylacetamid; Dialkylsulfoxide, vor allem Dimethylsulfoxid; cyclische Äther und cyclische Amide, wie Tetrahydrofuran, Tetrahydropyran, N-Methyl-2-pyrrolidon und N-Acetyl-2-pyrrolidon; Hexamethyl-phosphorsäuretriamid (Hexametapol); N,N,N',N'-Tetramethylharnstoff, Tetrahydrothiophendioxid (Sulfolan).

Die Reaktionstemperaturen für die Umhalogenierung liegen zweckmäßig zwischen 20 und 250°C und bevorzugt zwischen 50 und 130°C.

Als Beispiele für Verbindungen der Formel (8) seien genannt:

5-Methylsulfinyl-2,4,6-trifluorpyrimidin,
5-Methylsulfinyl-2,4,6-trichlorpyrimidin,
5-Methylsulfinyl-2,4,6-tribrompyrimidin.

Als Beispiele für Amino-, Hydroxy- und Mercaptoverbindungen, die mit Verbindungen der Formel (8) zwecks Austausch eines Halogenatoms gegen einen Amino-, Alkoxy-, Aryloxy-, Alkylthio- oder Arylthiorest kondensiert werden können, seien genannt:

Ammoniak, Methylamin, Dimethylamin, Äthylamin, Diäthylamin, Propylamin, Isopropylamin, Butylamin, Dibutylamin, Isobutylamin, sek.-Butylamin, tert.-Butylamin, Hexylamin, Methoxyäthylamin, Äthoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Äthylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin, 3-Nitro-4-methylanilin, o-, m- und p-Phenylendiamin, 3-Amino-4-methylanilin, 4-Amino-3-methylanilin, 2-Amino-4-methylanilin, o-, m- und p-Anisidin, o-, m- und p-Phenetidin, Naphthylamin-(1), Naphthylamin-(2), 1,4-Diaminonaphthalin, 1,5-Diaminonaphthalin, 2-Amino-l-hydroxy-naphthalin, 1-Amino-4-hydroxynaphthalin, 1-Amino-8-hydroxynaphthalin, 1-Amino-2-hydroxynaphthalin, 1-Amino-7-hydroxynaphthalin, Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Amino-toluol-4-sulfonsäure, 2-Aminotoluol-5-sulfonsäure, p-Amino-salicylsäure, 1-Amino-4-carboxybenzol-3-sulfonsäure, 1-Amino-2-carboxybenzol-5-sulfonsäure, 1-Amino-5-carboxybenzol-2-sulfonsäure,

2-Naphthylamin-1-, -3-, -4-, -5-, -6-, -7- und -8- sulfonsäure, 1-Naphthylamin-2,4-, -2,5-, -2,7-, -2,8-, -3,5-, -3,6-, -, 37-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-, und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6 und 8-Aminochinolin, 2-Aminopyrimidin, Morpholin, Piperidin, Piperazin, Wasser, Methanol, Äthanol, Propanol, Isopropanol, n-Butanol, Isobutanl, sek.-Butanol, tert.-Butanol, Hexanol, Cyclohexanol, $\beta$-Methoxyäthanol, $\beta$-Äthoxyäthanol, $\gamma$-Methoxypropanol, $\gamma$-Äthoxypropanol, $\beta$-Äthoxy-$\beta$-äthoxy-äthanol, Glycolsäure, Phenol, o-, m- und p-Chlorphenol, o-, m- und p-Nitrophenol, o-, m- und p-Hydroxybenzoesäure, o,- m- und p-Phenolsulfonsäure, Phenol-2,4-disulfonsäure, $\alpha$-Naphthol, $\beta$-Naphthol, 1-Hydroxy-naphthalin-8-sulfonsäure, 2-Hydroxynaphthalin-1-sulfonsäure, 1-Hydroxynaphthalin-5-sulfonsäure, 1-Hydroxynaphthalin-4-sulfonsäure, 1-Hydroxynahphthalin-6- oder -7-sulfonsäure, 2-Hydroxynaphthalin-6-, -7- oder -8-sulfonsäure, 2-Hydroxynaphthalin-4-sulfonsäure, 2-Hydroxynaphthalin-4,8- oder -6,8-disulfonsäure, 1-Hydroxynaphthalin-4,8-disulfonsäure, 2-Hydroxynaphthalin-3,6-disulfonsäure, Methanthiol, Äthanthiol, Propanthiol, Isopropanthiol, n-Butanthiol, Thioglycolsäure, Thioharnstoff, Thiophenol, $\alpha$-Thionaphthal, $\beta$-Thionaphthol.

Bei der Herstellung der bevorzugten Farbstoffe der Formel (1), worin D der Rest eines Azofarbstoffes, insbesondere eines Mono- oder Disazofarbstoffes, ist, erfolgt die Diazotierung der eine diazotierbare Aminogruppe enthaltenden Zwischenprodukte in der Regel durch Einwirkung salpetriger Säure in wäßrigmineralsaurer Lösung bei tiefer Temperatur, die Kupplung bei schwach sauren, neutralen bis schwach alkalischen pH-Werten.

Die Reaktivfarbstoffe der Formel (1) sind neu, sie zeichnen sich durch eine hohe Reaktivität und hohen Fixiergrad aus.

Sie eignen sich zum Färben und Bedrucken der verschiedensten Materialien, wie Seide, Leder, Wolle, Superpolyamidfasern und Superpolyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z. B. Wolle, Seide, oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierbaren Anteile fördernden Mittels zu unterwerfen.

Aus der FR-A 2 390 478 sind Farbstoffe mit einem faserrekativen Halogenpyrimidinrest bekannt. Die Farbstoffe der FR-A unterscheiden sich von den erfindungsgemäßen Farbstoffen dadurch, daß sie in 5-Stellung des Halogenpyrimidinrestes eine Alkylsulfonylgruppe, $-SO_2-X$, statt einer Alkylsulfinylgruppe, $-SO-X$, enthalten.

In den nachfolgenden Beispielen bedeuten die Teile Gewichtsteile, und die Temperaturen sind in Celsiusgraden angegeben.

Beispiel 1

5-Methylsulfinyl-2,4,6-trichlor-pyrimidin

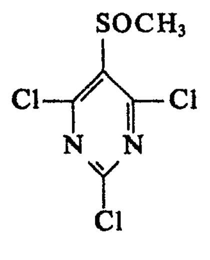

Zu einer Lösung von 186,8 g (0,81 Mol) 2,4,6-Trichlor-5-methylthio-pyrimidin in 2 Liter Methylenchlorid werden bei $-5°$ C 156 g (90%ig, 0,81 Mol) 4-Chlorperbenzoesäure in 1,5 Liter Methylchlorid tropfenweise zugegeben. Man läßt bei Raumtemperatur während 15 Stunden rühren. Die Reaktionsmischung wird filtriert, 2mal mit 1 N NaOH sowie 1mal mit $H_2O$ gewaschen, getrocknet, (über $Na_2SO_4$), eingedampft und aus einem Essigester/Petroläthergemisch auskristallisiert. Die Ausbeute beträgt 147,3 g (64% der Theorie). Schmelzpunkt 126—128° C.

In analoger Weise wurden folgende Pyrimidin-Verbindungen der Formel I hergestellt:

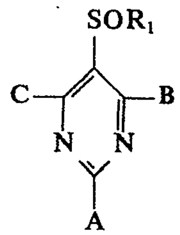

Die in der Tabelle in der Spalte A aufgeführten Amino-Substituenten werden durch nachträgliche Kondensation des 2,4,6-Trichlor- oder -tribrom-5-methylsulfinylpyrimidins mit Ammoniak eingeführt.

| $SOR_1$ | A | B | C | Schmelzpunkt °C |
|---|---|---|---|---|
| $SOCH_3$ | Cl | Cl | Cl | 126—128 |
| $SOCH_3$ | $NH_2$ | Br | Br | |
| $SOCH_3$ | $NH_2$ | Cl | Cl | 215—216 |
| $SOC_2H_5$ | Cl | Cl | Cl | |
| $SOC_3H_9$ | Cl | Cl | Cl | |
| $SOC_4H_7n$ | Cl | Cl | Cl | |
| $SOC_3H_7iso$ | Cl | Cl | Cl | |
| $SOC_4H_9tert.$ | Cl | Cl | Cl | |
| $SOCH_3$ | F | F | F | 46—48 |
| $SOCH_3$ | Br | Br | Br | |

Beispiel 2

8,76 Teile des Farbstoffes der Formel

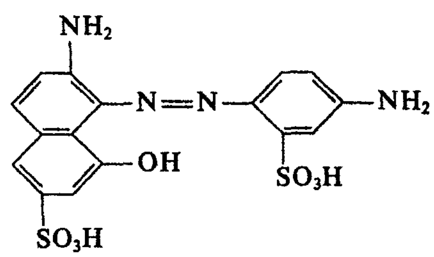

werden in 300 Teilen Wasser neutral gelöst und mit 6,68 Teilen Natriumacetat versetzt. Zur erhaltenen Lösung gibt man bei Zimmertemperatur unter kräftigem Rühren eine Lösung von 5,4 Teilen 2,4,6-Trichlor-5-methylsulfinylpyrimidin in 40 Teilen Aceton. Nach vollständiger Acylierung wird die Lösung klärfiltriert. Der entstandene Reaktivfarbstoff wird mit 10 Vol.-% Kochsalz ausgesalzen, abfiltriert, mit einer gesättigten Lösung von Natriumdihydrogenphosphat gepuffert und im Vakuum bei ca. 50°C getrocknet.

Der so erhaltene Farbstoff färbt Baumwolle sowohl nach dem Ausziehverfahren als auch nach dem Pad-Steam-Verfahren in blaustichig roten Tönen.

In der folgenden Tabelle sind weitere aminogruppenhaltige Chromophore aufgeführt, die mit 2,4, 6-Trichlor-5-methylsulfinyl-pyrimidin zu Reaktivfarbstoffen umgesetzt werden können, die Baumwolle in den angegebenen Nuancen färben.

Tabelle I

| | |
|---|---|
| 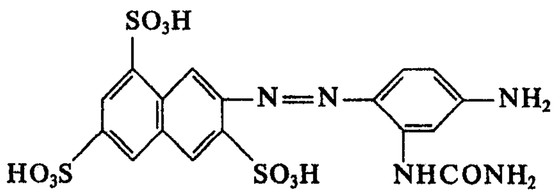 | goldgelb |
| 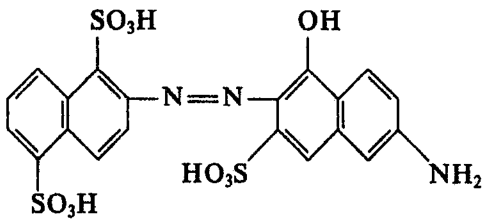 | orange |
| 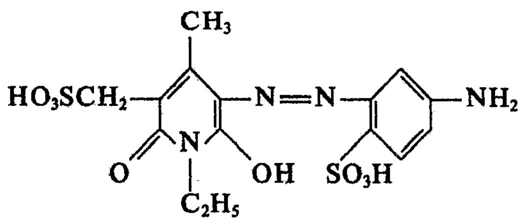 | grünstichig gelb |
| 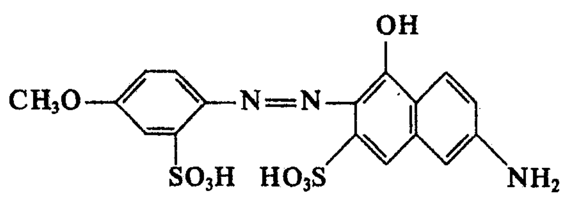 | scharlach |
| 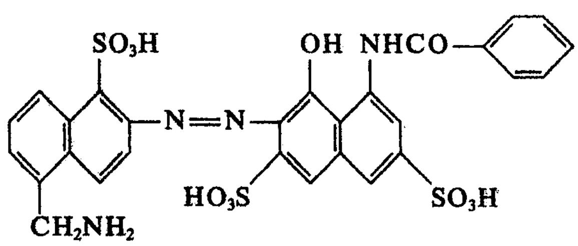 | rot |
| 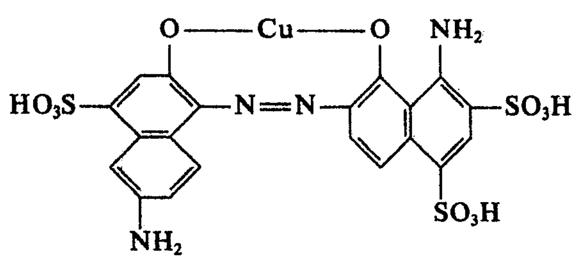 | blau |
| 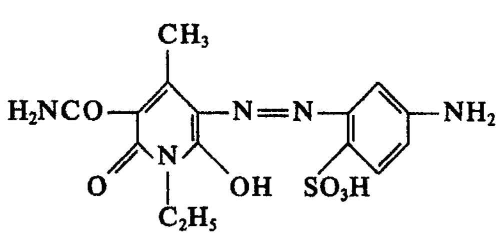 | grünstichig gelb |

Fortsetzung

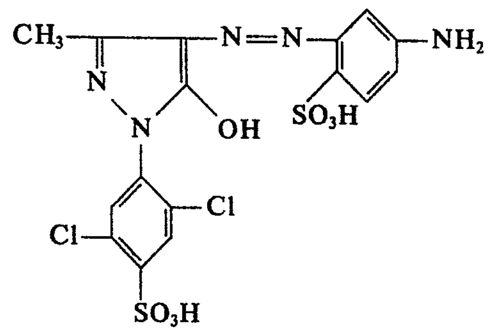

grünstichig gelb

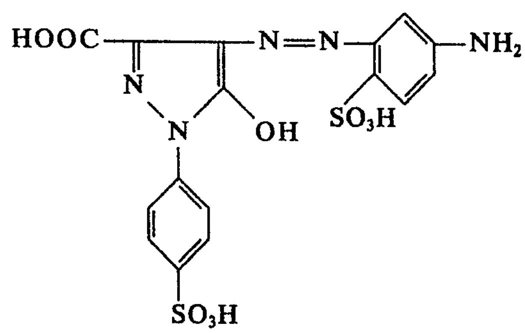

grünstichig gelb

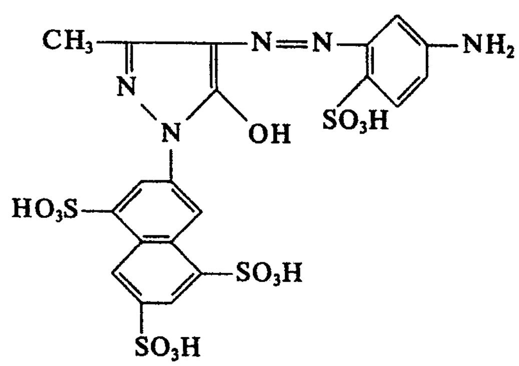

gelb

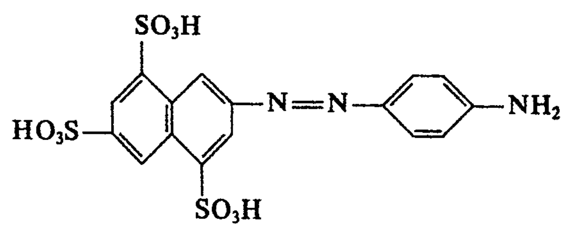

gelb

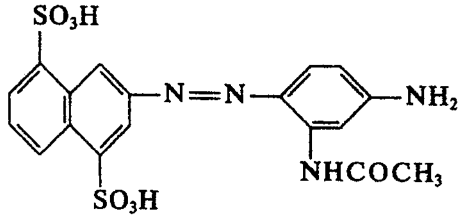

gelb

Fortsetzung

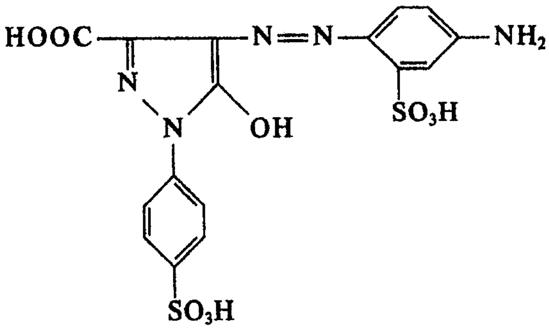

rotstichig gelb

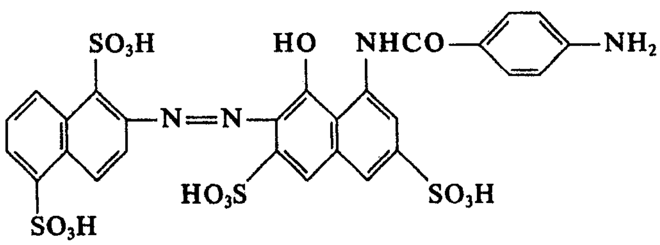

blaustichig rot

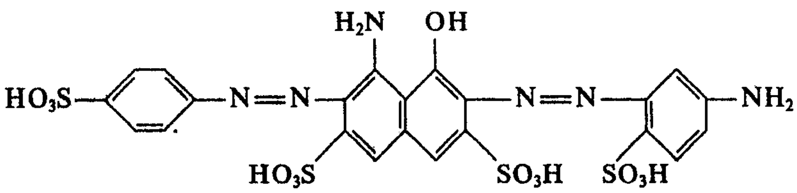

grünstichig marineblau

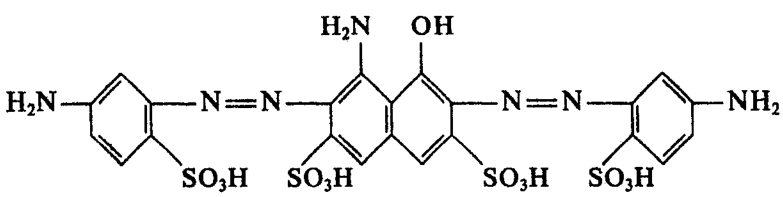

grünstichig marineblau

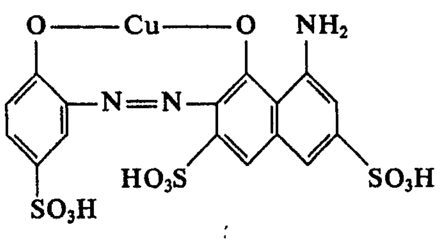

violett

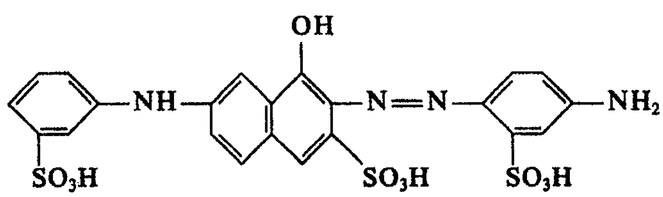

braun

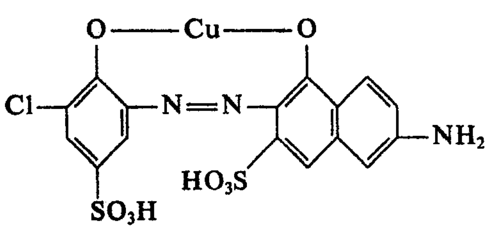

rubin

Fortsetzung

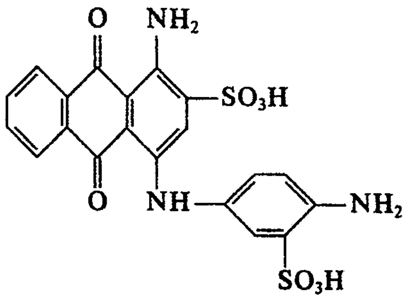

grünstichig blau

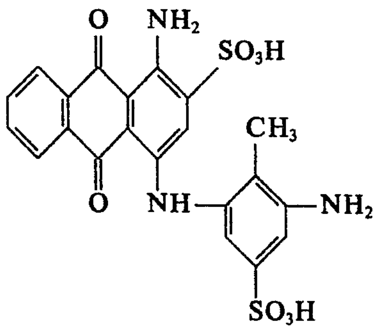

blau

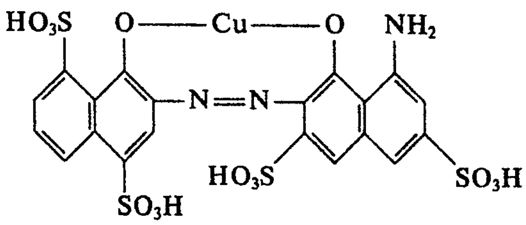

blau

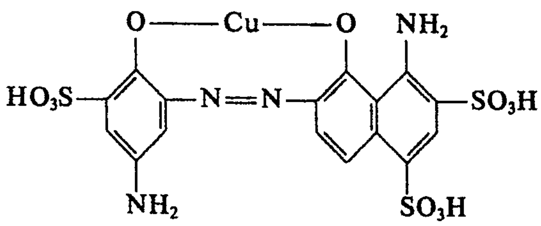

marineblau

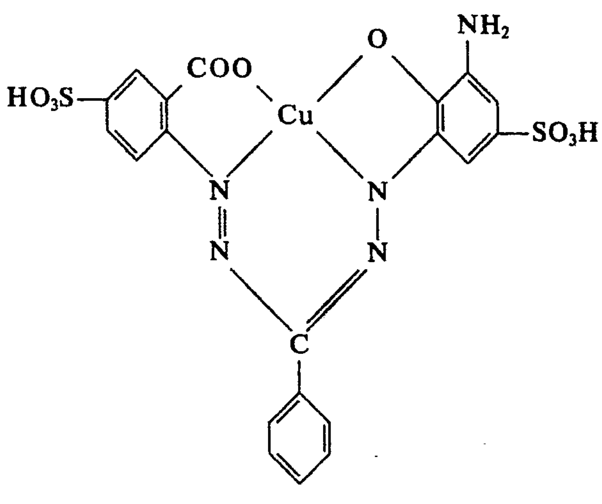

blau

Fortsetzung

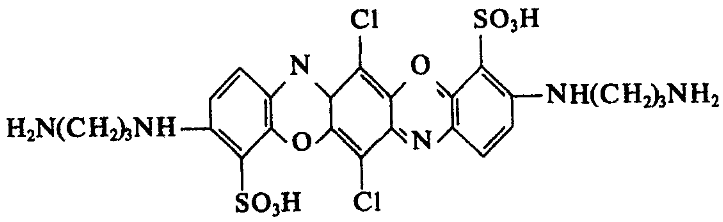

blau

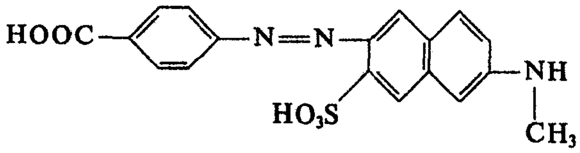

orange

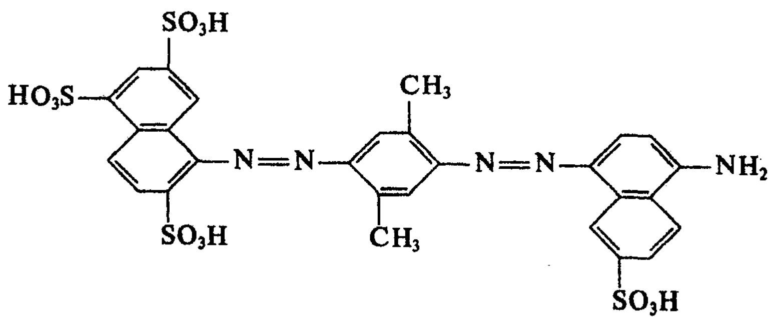

braun

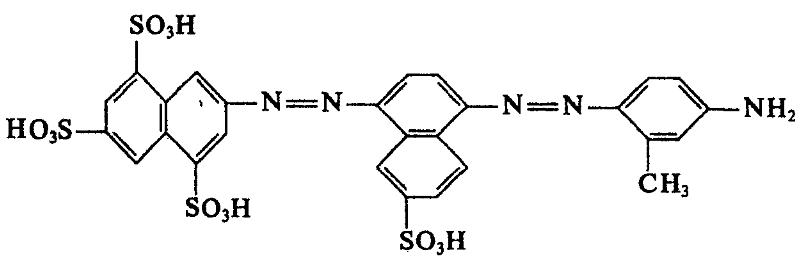

braun

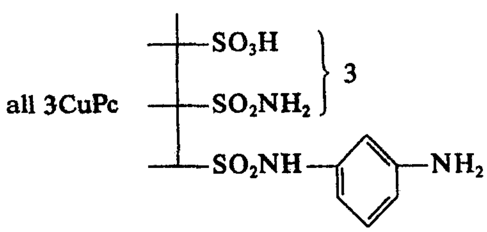

türkis

Beispiel 3

3,76 Teile 2,4-Diaminobenzol-sulfonsäure werden in 200 Teilen Wasser neutral gelöst und mit 6,6 Teilen Natriumacetat versetzt. Zu dieser Lösung gibt man hierauf bei Zimmertemperatur unter kräftigem Rühren eine Lösung von 5,4 Teilen 2,4,6-Trichlor-5-methyl-sulfinyl-pyrimidin in 30 Teilen Aceton. Das auf diese Weise erhaltene Kondensationsprodukt der Formel

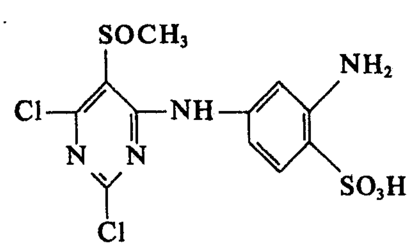

wird anschließend in üblicher Weise diazotiert und mit einer sodaalkalischen Lösung von 6,46 Teilen 1-(2',5'-Dichlorphenyl)-3-methyl-5-pyrazolon-4'-sulfonsäure vereinigt.

Der so erhaltene Farbstoff färbt Baumwolle in grünstichig gelben Tönen.

Verwendet man anstelle des obigen Pyrazolons eine äquivalente Menge der in Kolonne I der nachfolgenden Tabelle angegebenen Kupplungskomponenten, so erhält man Farbstoffe, die Baumwolle in den in Kolonne II angegebenen Tönen färben.

| I | II |
|---|---|
| 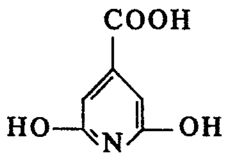 | grünstichig gelb |
| 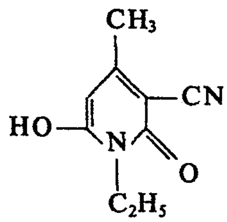 | grünstichig gelb |
| 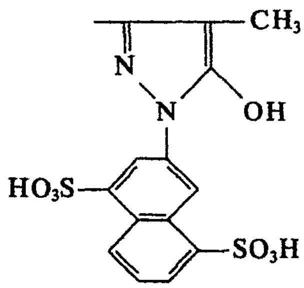 | gelb |
| 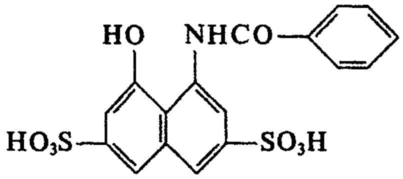 | blaustichig rot |
| 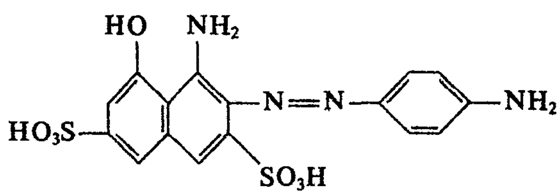 | marineblau |

Beispiel 4

5,45 Teile des Farbstoffes der Formel

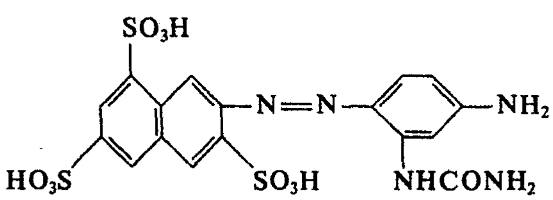

werden in 100 Teilen Wasser neutral gelöst und mit 50 Teilen Eis versetzt. Zur eiskalten Lösung gibt

man hierauf unter kräftigem Rühren eine Lösung von 2,16 Teilen 2,4,6-Trifluor-5-methylsulfinyl-pyrimidin in 20 Teilen Aceton, wobei durch Eintropfen von 1-n Natriumhydroxydlösung das pH des Reaktionsgemisches zwischen 5 und 7 gehalten wird.

Nach der vollständigen Acylierung der Aminogruppe versetzt man die Lösung der Difluorverbindung mit einer neutralen Lösung von 1,73 Teilen Metanilsäure in 50 Teilen Wasser, erwärmt auf 30 bis 35° C und hält das pH der Lösung durch Eintropfen von 1-n Natriumhydroxydlösung zwischen 6 und 7.

Sobald die zweite Kondensation beendet ist, wird der Farbstoff ausgesalzen und abfiltriert. Die Farbstoffpaste wird mit einer konzentrierten wäßrigen Lösung von 0,5 Teilen Dinatriumhydrogenphosphat vermischt und im Vakuum bei 40 bis 50° C getrocknet.

Der so erhaltene Farbstoff färbt Baumwolle in goldgelben Tönen.

Beispiel 5

Zu einer neutralen Lösung von 1,73 Teilen Orthanilsäure in 100 Teilen Eiswasser gibt man unter kräftigem Rühren eine Lösung von 2,16 Teilen 2,4,6-Trifluor-5-methylsulfinyl-pyrimidin in 20 Teilen Aceton und stellt das pH der Lösung durch Zutropfen von ca. 10 Teilen 1-n Natriumhydroxydlösung wieder auf 7.

Zur so erhaltenen neutralen Lösung des primären Kondensationsproduktes gibt man hier auf eine neutrale Lösung von 4,38 Teilen des Farbstoffes der Formel

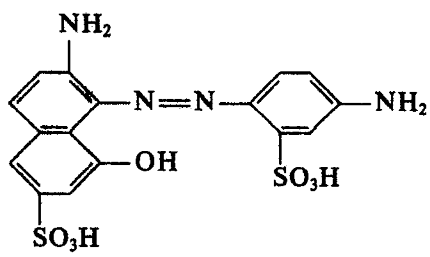

erwärmt das Reaktionsgemisch auf 30 bis 35° C und hält das pH der Lösung durch Zutropfen von ca. 10 Teilen 1-n Natriumhydroxydlösung zwischen 6 und 7.

Nach erfolgter Acylierung des Chromophors wird der entstandene Monofluorpyrimidyl-Farbstoff ausgesalzen und abfiltriert. Die Farbstoffpaste wird mit einer konzentrierte, wäßrigen Lösung von 0,5 Teilen Dinatriumhydrogenphosphat vermischt und im Vakuum bei 40 bis 50° C getrocknet.

Der so erhaltene Farbstoff färbt Baumwolle in blaustichig roten Tönen.

Durch Kondensation von 2,4,6-Trifluor-5-methylsulfinylpyrimidin mit den aminogruppenhaltigen Farbstoffen der Kolonne I und den Aminen der Kolonne II nach den Angaben der Beispiele 4 und 5 erhält man weitere Monofluorpyrimidinfarbstoffe, die Baumwolle in den in Kolonne III angegebenen Tönen färben.

| I | II | III |
|---|---|---|
| 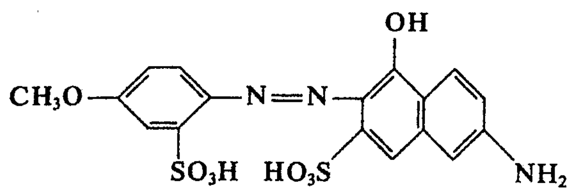 | Metanilsäure | scharlach |
| desgl. | N-Äthylanilin | desgl. |
| desgl. | p-Toluidin | desgl. |
| 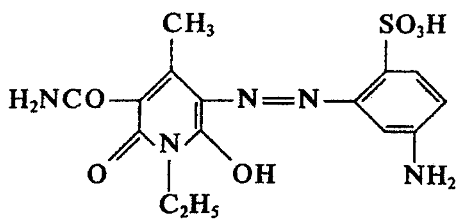 | Orthanilsäure | grünstichiggelb |
| desgl. | 2-Naphthylamin-6-sulfonsäure | desgl. |
| desgl. | p-Aminobenzoesäure | desgl. |
| 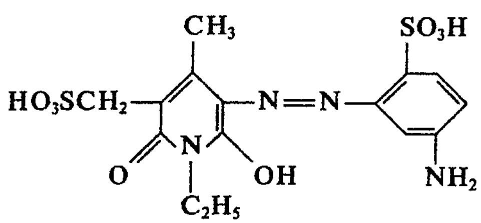 | p-Amino-acetanilid | desgl. |

Fortsetzung

| I | II | III |
|---|---|---|
| 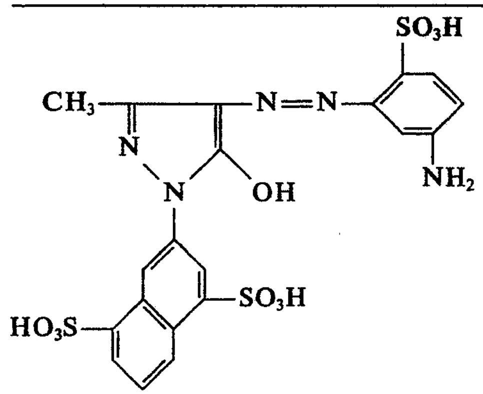 | o-Toluidin | gelb |
| desgl. | p-Chloranilin | desgl. |
| desgl. | o-Anisidin | desgl. |
| desgl. | Ammoniak | desgl. |
| 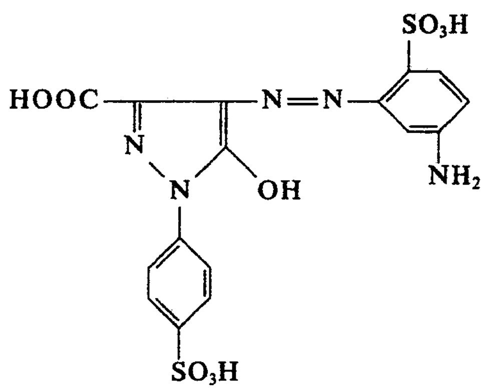 | Anilin | desgl. |
| desgl. | Morpholin | desgl. |
| desgl. | N-Äthylanilin | desgl. |
| desgl. | Metanilsäure | desgl. |

Fortsetzung

| I | II | III |
|---|---|---|
| 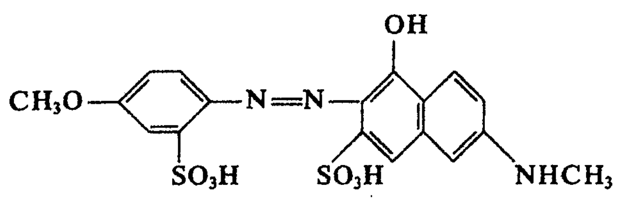 | Metanilsäure | scharlach |
| 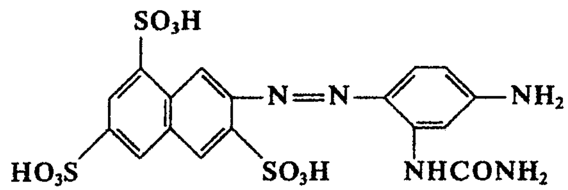 | o-Toluidin | goldgelb |
| desgl. | Taurin | desgl. |
| 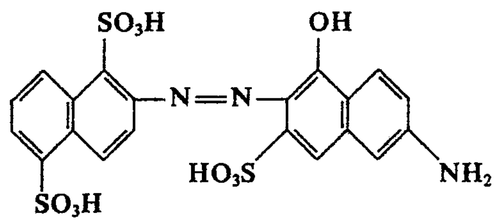 | N-Methylanilin | orange |
| desgl. | Metanilsäure | desgl. |
| desgl. | p-Anisidin | desgl. |
| 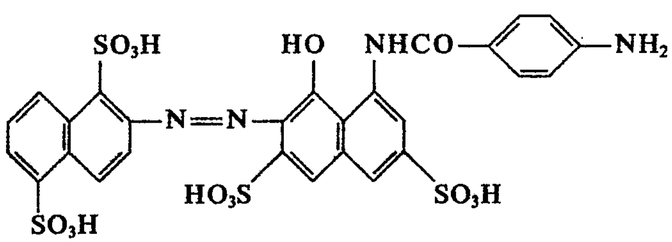 | o-Toluidin | blaustichigrot |

Fortsetzung

| I | II | III |
|---|---|---|
| 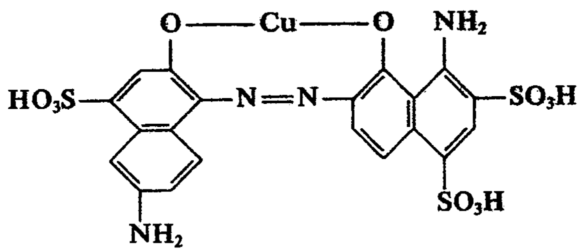 | Orthanilsäure | blau |
| desgl. | Metanilsäure | desgl. |
| 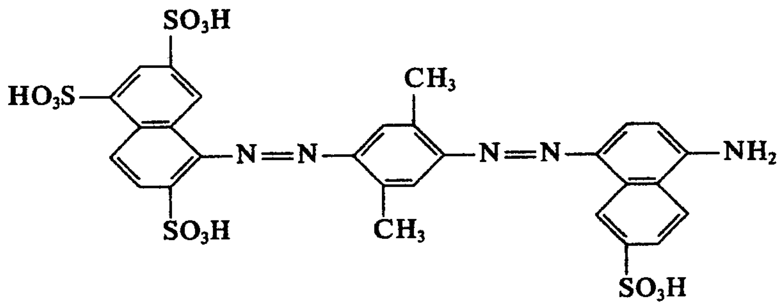 | Ammoniak | braun |
| 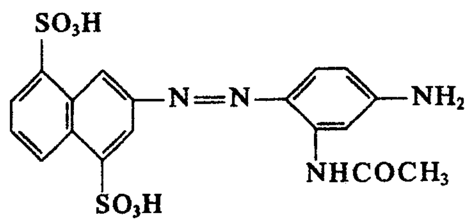 | Metanilsäure | gelb |
| 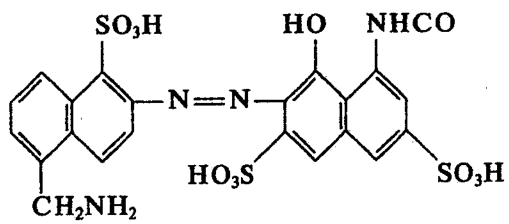 | desgl. | blaustichigrot |

Fortsetzung

| I | II | III |
|---|---|---|
| 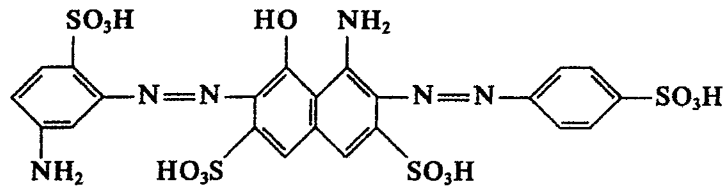 | o-Toluidin | dunkelblau |
| 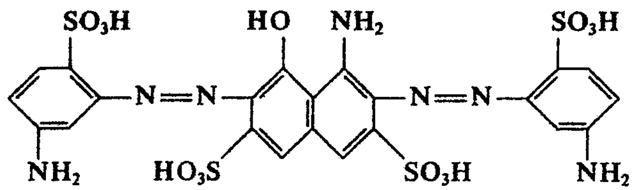 | Sulfanilsäure | grünstichigmarineblau |
| 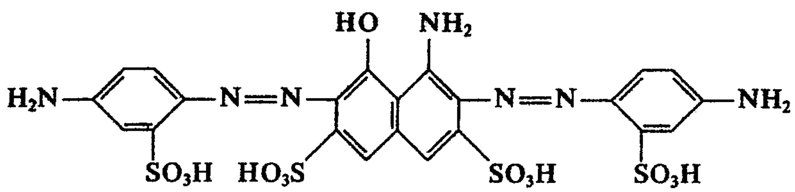 | Metanilsäure | grünblau |
| 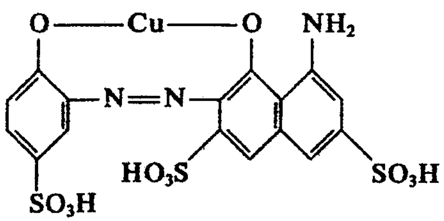 | Ammoniak | violett |
| 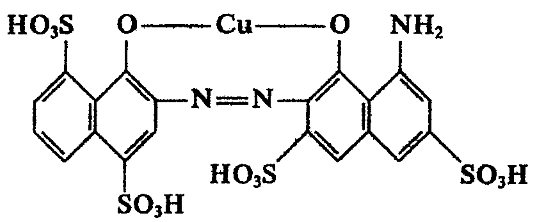 | o-Toluidin | blau |

Fortsetzung

| I | II | III |
|---|---|---|
| 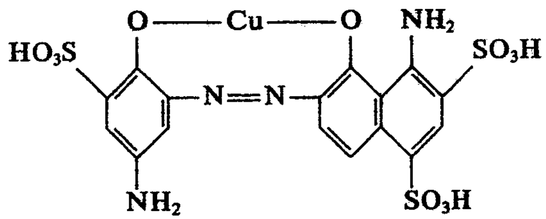 | 2-Aminotoluol-4-sulfonsäure | rotstichigblau |
| 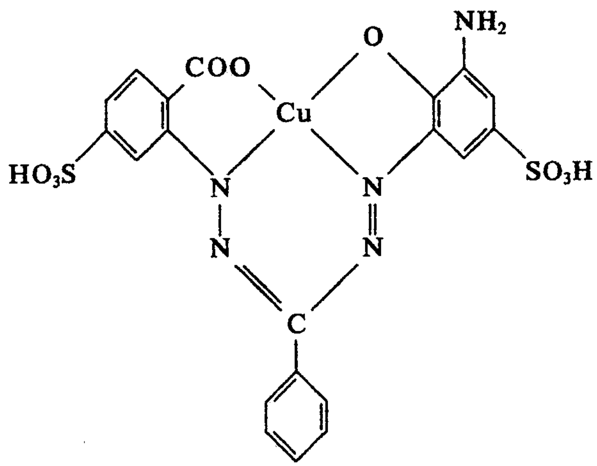 | Orthanilsäure | blau |
| 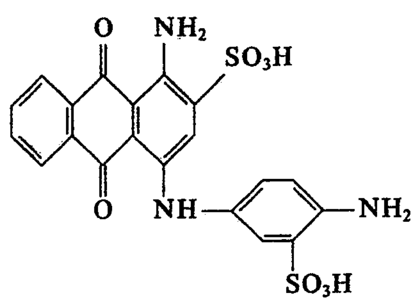 | Äthanolamin | grünstichiggelb |

Fortsetzung

| I | II | III |
|---|---|---|
| 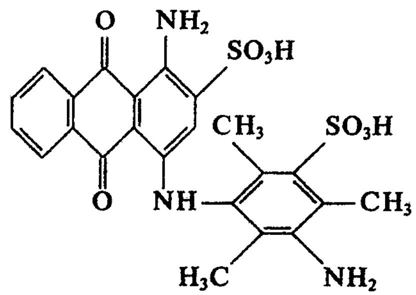 | 4-Aminosalicylsäure | königsblau |
| 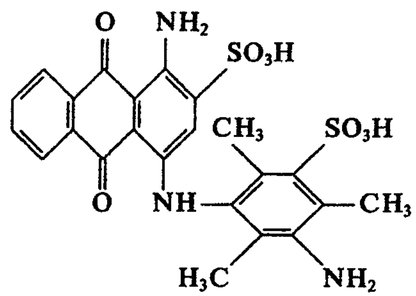 | 4-Amino-phenylharnstoff | desgl. |
| desgl. | 2-Chloranilin | desgl. |
| 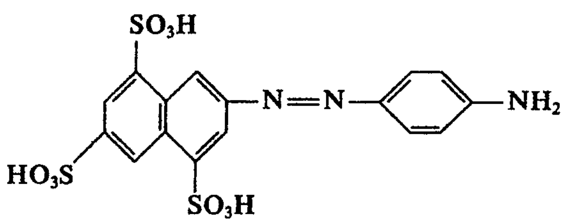 | 3-Amino-phenylharnstoff | gelb |
| 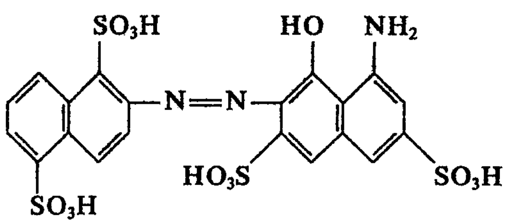 | o-Toluidin | blaustichigrot |

Fortsetzung

| I | II | III |
|---|---|---|
| 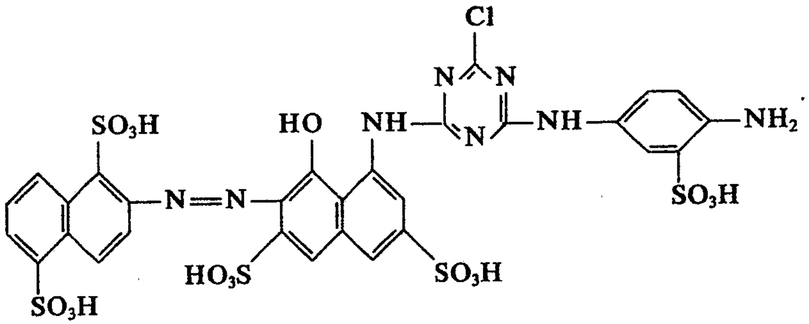 | o-Toluidin | blaustichigrot |
| 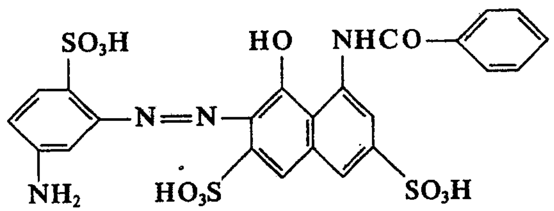 | Metanilsäure | desgl. |
| 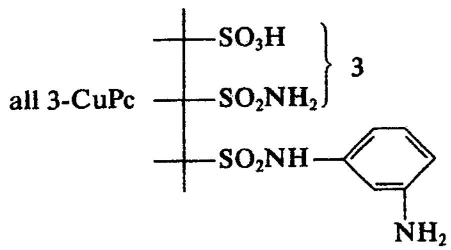 | 2-Naphthylamin-6-sulfonsäure | türkis |
| 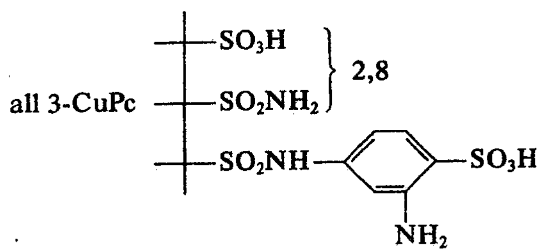 | 2-Äthylanilin | desgl. |

Fortsetzung

| I | II | III |
|---|---|---|
| 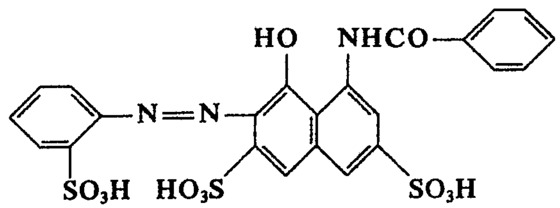 | Metanilsäure | rot |
| 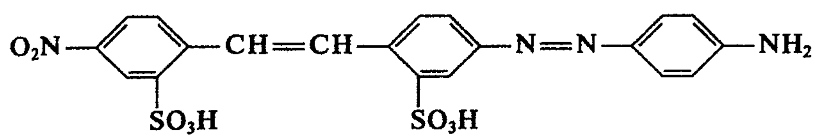 | Orthanilsäure | gelb |
| 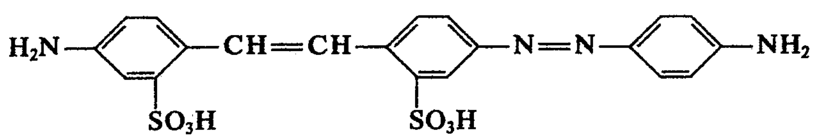 | Metanilsäure | desgl. |
| 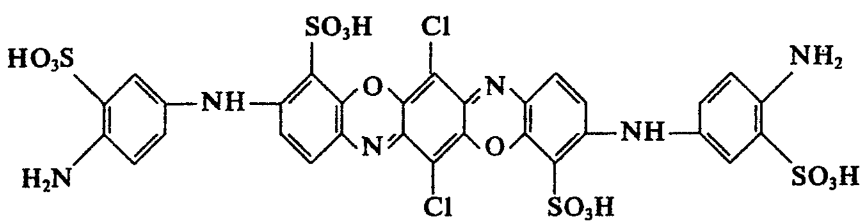 | desgl. | blau |
| 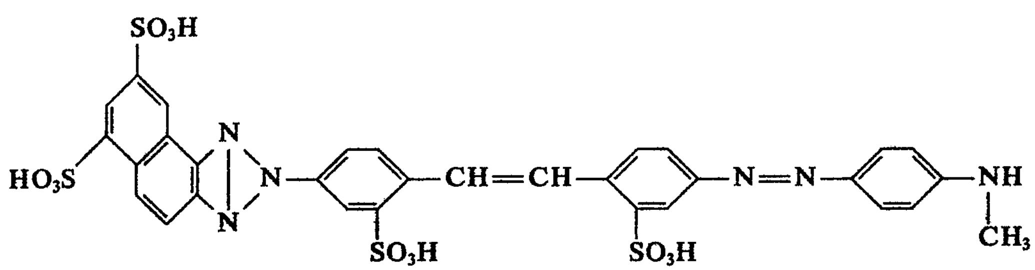 | Ammoniak | gelb |

Fortsetzung

| I | II | III |
|---|---|---|
| 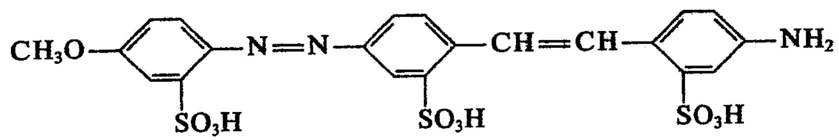 | 3-Aminotoluol | gelb |
| 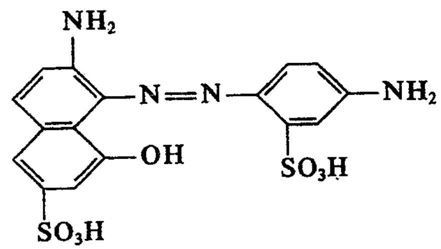 | 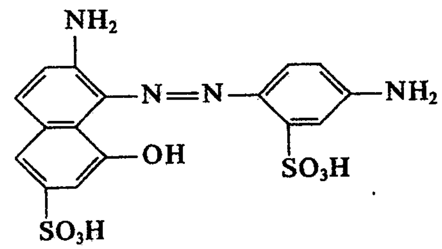 | blaustichigrot |
| 2 Äquivalente von 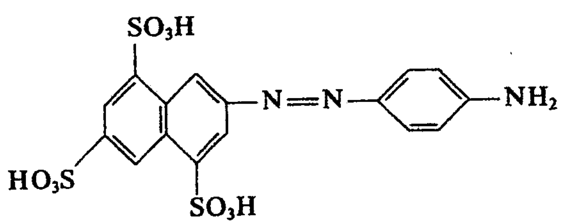 | 1 Äquivalent von p-Phenylen-diamin | gelb |

Färbevorschrift I

2 Teile des gemäß Beispiel 2 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20°C warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

Färbevorschrift II

2 Teile des gemäß Beispiel 2 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°C, wobei nach 30 Minuten 40 Teile kalzinierte Soda und nochmals 60 Teile Natriumchlorid zugegeben werden. Man hält die Temperatur 30 Minuten auf 40°C, spült und seift dann die Färbung während 15 Minuten in einer 0,3%igen kochenden Lösung eines ionenfreien Waschmittels, spült und trocknet.

**Patentansprüche**

1. Reaktivfarbstoffe der Formel I

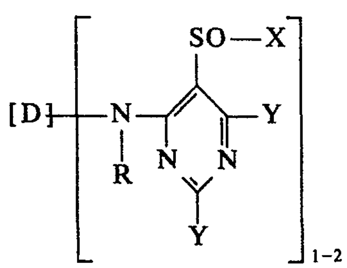

(1)

worin D der Rest eines sulfogruppenhaltigen Farbstoffes der Mono- oder Polyazo-, Metallkomplexazo-, Anthrachinon-, Phthalocyanin-, Formazan-, Azomethin-, Nitroaryl-, Dioxazin-, Phenazin- oder Stilbenreihe, R Wasserstoff oder gegebenenfalls substituiertes $C_1-C_4$-Alkyl, X $C_1-C_4$-Alkyl, ein Y Fluor, Chlor oder Brom und das andere Y Fluor, Chlor, Brom oder ein Amino-, Alkoxy-, Aryloxy-, Alkylthio- oder Arylthiorest ist, wobei die aufgeführten Reste gegebenenfalls substituiert sind.

2. Reaktivfarbstoffe gemäß Anspruch 1, worin D, R und X die in Anspruch 1 angegebenen Bedeutungen haben, und beide Y Chloratome sind.

3. Reaktivfarbstoffe gemäß Anspruch 1, der Formel

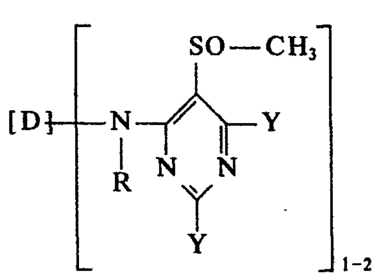

(2)

worin D, R und Y die in Anspruch 1 angegebenen Bedeutungen haben.

4. Reaktivfarbstoffe gemäß Anspruch 3, worin D und R die in Anspruch 3 angegebenen Bedeutungen haben, und beide Y Chloratome sind.

5. Reaktivfarbstoffe gemäß Anspruch 3, worin D der Rest eines Mono- oder Disazofarbstoffes ist.

6. Reaktivfarbstoffe gemäß Anspruch 3, worin D der Rest eines Metallkomplexazo- oder Formazanfarbstoffes ist.

7. Reaktivfarbstoffe gemäß Anspruch 4, der Formel

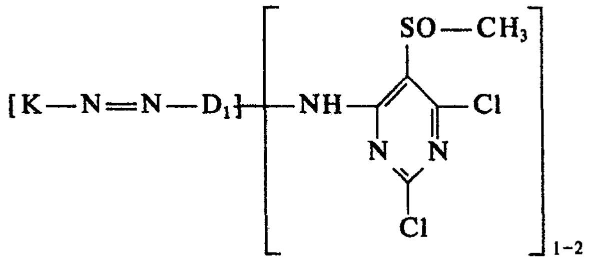

(3)

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und der Reaktivrest an die Diazokomponente oder an die Kupplungskomponente gebunden ist, oder je ein Reaktivrest sowohl an die Diazokomponente als auch an die Kupplungskomponente gebunden ist.

8. Reaktivfarbstoffe gemäß Anspruch 6, worin D der Rest eines Metallkomplexazofarbstoffes der Benzol- oder Naphthalinreihe ist.

9. Reaktivfarbstoffe gemäß Anspruch 8, worin der Rest D ein 1 : 1-Kupferkomplexazofarbstoff ist, und das Kupferatom an jeweils eine metallisierbare Gruppe in ortho-Position zur Azobrücke gebunden ist.

10. Reaktivfarbstoffe gemäß Anspruch 1, der Formel

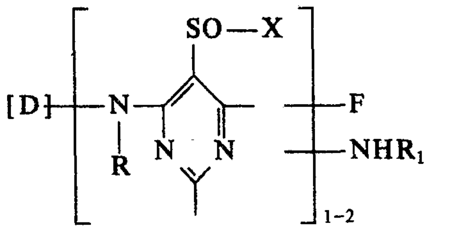

(4)

worin D, R und X die im Anspruch 1 angegebenen Bedeutungen haben und $R_1$ Wasserstoff oder gegebenenfalls substituiertes Alkyl, Cycloalkyl, Aralkyl oder Aryl ist.

11. Reaktivfarbstoffe gemäß Anspruch 10, worin D der Rest eines Mono- oder Disazofarbstoffes ist.

12. Reaktivfarbstoffe gemäß Anspruch 11, der Formel

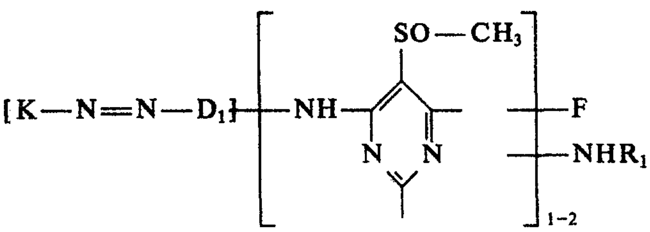

(5)

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes Alkyl, Cycloalkyl, Aralkyl oder Aryl ist, und der Reaktivrest an die Diazokomponente oder an die Kupplungskomponente oder aber je ein Reaktivrest sowohl an die Diazokomponente als auch an die Kupplungskomponente gebunden ist.

13. Reaktivfarbstoffe gemäß den Ansprüchen 5 und 11, worin der Rest D als Substituenten Alkyl mit 1 bis 4 Kohlenstoffatomen, Alkoxy mit 1 bis 4 Kohlenstoffatomen, Acylamino mit 1 bis 6 Kohlenstoffatomen, Amino, Alkoxycarbonyl, Nitro, Cyano, Acetyl, Trifluormethyl, Halogen, Sulfamoyl, Carbamoyl, Ureido, Hydroxy, Carboxy, Sulfomethyl und Sulfo enthalten kann.

14. Reaktivfarbstoffe gemäß Anspruch 13, worin der Rest D als Substituenten Methyl, Äthyl, Methoxy, Benzoylamino, Amino, Ureido, Sulfomethyl, Hydroxy und Sulfo enthalten kann.

15. Der Reaktivfarbstoff gemäß Anspruch 7, der Formel

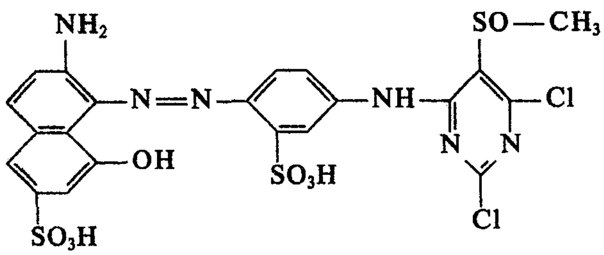

(6)

16. Verfahren zur Herstellung von Reaktivfarbstoffen der Formel

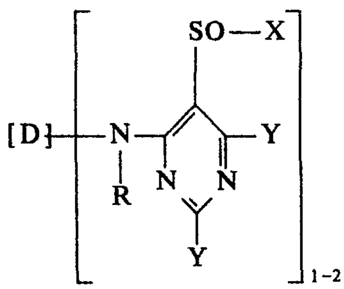

(1)

worin D der Rest eines sulfogruppenhaltigen Farbstoffes der Mono- oder Polyazo-, Metallkomplexazo-, Anthrachinon-, Phthalocyanin-, Formazan-, Azomethin-, Nitroaryl-, Dioxazin-, Phenazin- oder Stilbenreihe, R Wasserstoff oder gegebenenfalls substituiertes $C_1-C_4$-Alkyl, X $C_1-C_4$-Alkyl, ein Y Fluor, Chlor oder Brom und das andere Y Fluor, Chlor, Brom oder ein Amino-, Alkoxy-, Aryloxy-, Alkylthio- oder Arylthiorest ist, wobei die aufgeführten Reste gegebenenfalls substituiert sind, dadurch gekennzeichnet, daß man organische Farbstoffe der Formel

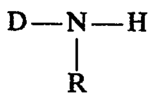

(7)

oder Farbstoffprodukte mit mindestens einem Äquivalent einer Verbindung der Formel

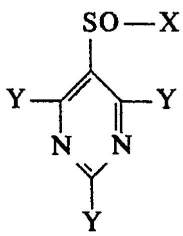

(8)

wobei D, R, X und Y in den Formel (7) und (8) die unter Formel (1) angegebenen Bedeutungen haben, und, falls alle drei Y in Formel (8) Fluor, Chlor oder Brom sind, gegebenenfalls mit einem Amin, einem Alkohol, einer aromatischen Hydroxyverbindung, einem Alkyl- oder Arylmercaptan zu einem Reaktivfarbstoff der Formel (1) kondensiert, und daß man im Falle der Verwendung von Farbstoffvorprodukten, diese in die gewünschten Endfarbstoffe umwandelt.

17. Verfahren gemäß Anspruch 16, zur Herstellung von Reaktivfarbstoffen der Formel (1), dadurch gekennzeichnet, daß man eine Komponente des Farbstoffes der Formel (7), die eine

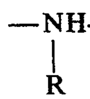-Gruppe

enthält, eine Verbindung der Formel(8), und gegebenenfalls ein Amin, einen Alkohol, eine aromatische Hydroxyverbindung, ein Alkyl- oder Arlymercaptan kondensiert, und in einer beliebigen Stufe des Verfahrens mit der anderen Komponente des Farbstoffes der Formel (7) umsetzt.

18. Verfahren gemäß Anspruch 16, zur Herstellung von Reaktivfarbstoffen der Formel (1), worin D, R und X die in Anspruch 16 angegebenen Bedeutungen haben, dadurch gekennzeichnet, daß man eine Verbindung der Formel (8), worin alle drei Y Chloratome sind, als Ausgangsstoff verwendet.

19. Verfahren gemäß Anspruch 16, zur Herstellung von Reaktivfarbstoffen der Formel

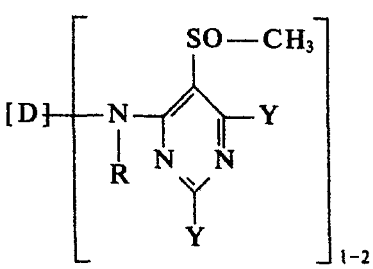

(2)

worin D, R und Y die in Anspruch 16 angegebenen Bedeutungen haben, dadurch gekennzeichnet, daß man organische Farbstoffe der Formel (7) mit mindestens einem Äquivalent einer Verbindung der Formel

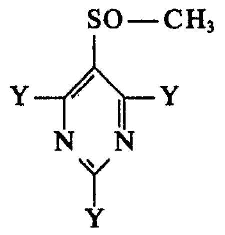

(9)

worin Y die in Anspruch 16 angegebenen Bedeutungen hat, und, falls alle drei Y Fluor, Chlor oder Brom sind, gegebenenfalls mit einem Amin, einem Alkohol, einer aromatischen Hydroxyverbindung, einen Alkyl- oder Arylmercaptan kondensiert.

20. Verfahren gemäß Anspruch 19, dadurch gekennzeichnet, daß man organische Farbstoffe der Formel (7), worin D und R die in Anspruch 19 angegebenen Bedeutungen haben, mit einer Verbindung der Formel

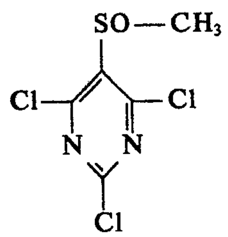

(10)

kondensiert.

21. Verfahren gemäß Anspruch 19, dadurch gekennzeichnet, daß man Verbindungen der Formel (7), worin D der Rest eines Mono- oder Disazofarbstoffes ist, als Ausgangsstoffe verwendet.

22. Verfahren gemäß Anspruch 17, dadurch gekennzeichnet, daß man eine Diazokomponente des Farbstoffes, die eine

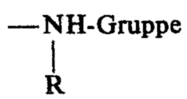

enthält, mit einer Verbindung der Formel (8), worin zwei Y Fluor, Chlor oder Brom sind, und das dritte Y Fluor, Chlor, Brom oder gegebenenfalls substituiertes Amino, Alkoxy, Aryloxy, Alkylthio der Arylthio ist, kondensiert, das erhaltene Kondensationsprodukt diazotiert und auf eine Kupplungskomponente kuppelt.

23. Verfahren gemäß Anspruch 17, dadurch gekennzeichnet, daß man eine Kupplungskomponente des Farbstoffes, die eine

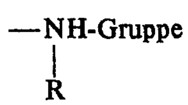

enthält, mit einer Verbindung der Formel (8), worin zwei Y Fluor, Chlor oder Brom sind, und das dritte Y Fluor, Chlor, Brom oder gegebenenfalls substiuiertes Amino, Alkoxy, Aryloxy, Alkylthio oder Arylthio ist, kondensiert, und auf das so erhaltene Kondensationsprodukt eine diazotierte Diazokomponente kuppelt.

24. Verfahren gemäß Anspruch 17, dadurch gekennzeichnet, daß man eine Diazokomponente, die eine

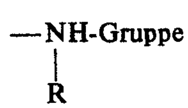

enthält, mit einer Verbindung der Formel (8), worin zwei Y Fluor, Chlor oder Brom sind und das dritte Y Fluor, Chlor, Brom oder gegebenenfalls substituiertes Amino, Alkoxy, Aryloxy, Alkythio oder Arylthio ist, kondensiert, daß man ferner eine Kupplungskomponente, die eine

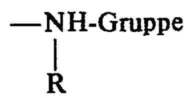

enthält, mit einer Verbindung der Formel (8), worin zwei Y Fluor, Chlor oder Brom sind und das dritte Y Fluor, Chlor, Brom oder gegebenenfalls substituiertes Amino, Alkoxy, Aryloxy, Alkylthio oder Arylthio ist, kondensiert, und daß man das Kondensationsprodukt der Diazokomponente diazotiert und auf das Kondensationsprodukt der Kupplungskomponente kuppelt, wobei R und Y im Kondensationsprodukt der Diazokomponente unabhängig ist von R und Y im Kondensationsprodukt der Kupplungskomponente.

25. Verfahren gemäß Anspruch 19, dadurch gekennzeichnet, daß man Verbindungen der Formel (7), worin D der Rest eines Metallkomplexazo- oder Formazanfarbstoffes ist, als Ausgangsstoffe verwendet.

26. Verfahren gemäß Anspruch 21, dadurch gekennzeichnet, daß man organische Farbstoffe der Formel

$$[K-N=N-D_1]-[NH_2]_{1-2} \qquad (11)$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, mit einer Verbindung der Formel (10) kondensiert, wobei die Kondensation an der $NH_2$-Gruppe der Diazokomponente oder an der $NH_2$-Gruppe der Kupplungskomponente erfolgt, oder mit zwei Verbindungen der Formel (10) kondensiert, wobei die Kondensation an der $NH_2$-Gruppe der Diazokomponente und an der $NH_2$-Gruppe der Kupplungskomponente erfolgt.

27. Verfahren gemäß Anspruch 25, zur Herstellung von Reaktiv-Metallkomplexazofarbstoffen, dadurch gekennzeichnet, daß man Verbindungen der Formel (7), worin D der Rest eines Azofarbstoffes der Benzol- oder Naphthalinreihe ist, der metallisierbare Gruppen in ortho-Position zur Azobrücke enthält, mit einer Verbindung der Formel (9), worin zwei Y Fluor, Chlor oder Brom sind und das dritte Y Fluor, Chlor, Brom oder gegebenenfalls substituiertes Amino, Alkoxy, Aryloxy, Alkylthio oder Arylthio ist, und mit schwermetallabgebenden Mitteln in beliebiger Reihenfolge umsetzt.

28. Verfahren gemäß Anspruch 27, dadurch gekennzeichnet, daß man einen Monoazofarbstoff der Benzol- oder Naphthalinreihe, der in ortho-Position zur Azobrücke metallisierbare Gruppe enthält, mit einer Verbindung der Formel (10) und mit kupferabgebenden Mitteln in beliebiger Reihenfolge zu einem 1 : 1-Kupferkomplexazofarbstoff umsetzt.

29. Verfahren gemäß Anspruch 16, zur Herstellung von Reaktivfarbstoffen der Formel

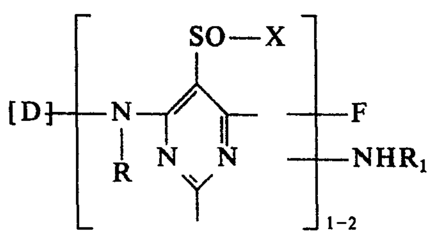

(4)

worin D, R und X die in Anspruch 16 angegebenen Bedeutungen haben und $R_1$ Wasserstoff oder gegebenenfalls substituiertes Alkyl, Cycloalkyl, Aralkyl oder Aryl ist, dadurch gekennzeichnet, daß man organische Farbstoffe der Formel

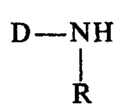

(7)

oder Farbstoffvorprodukte, Verbindungen der Formel

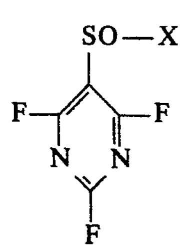

(12)

und Amine der Formel

$$H_2N - R_1 \qquad (13)$$

in beliebiger Reihenfolge miteinander umsetzt, und daß man im Falle der Verwendung von Farbstoffvorprodukten, diese in die gewünschten Endfarbstoffe umwandelt.

30. Verfahren gemäß Anspruch 29, dadurch gekennzeichnet, daß man Verbindungen der Formel (7), worin D der Rest eines Mono- oder Disazofarbstoffes ist, als Ausgangsstoffe verwendet.

31. Verfahren gemäß Anspruch 30, zur Herstellung von Reaktivfarbstoffen der Formel

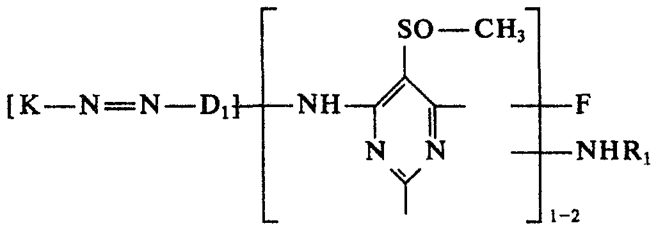

(5)

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, und $R_1$ Wasserstoff oder gegebenenfalls substituiertes Alkyl, Cycloalkyl, Aralkyl oder Aryl ist, und der Reaktivrest an die Diazokomponenten oder an die Kupplungskomponente oder aber je ein Reaktivrest sowohl an die Diazokomponente als auch an die Kupplungskomponente gebunden ist.

32. Verfahren gemäß den Ansprüchen 21 und 30, dadurch gekennzeichnet, daß man Verbindungen der Formel (7), worin D als Substituenten Alkyl mit 1 bis 4 Kohlenstoffatomen, Alkoxy mit 1 bis 4 Kohlenstoffatomen, Acylamino mit 1 bis 6 Kohlenstoffatomen, Amino, Alkoxycarbonyl, Nitro, Cyano, Acetyl, Trifluormethyl, Halogen, Sulfamoyl, Carbamoyl, Ureido, Hydroxy, Carboxy, Sulfomethyl und Sulfo enthalten kann, als Ausgangsstoffe verwendet.

33. Verfahren gemäß Anspruch 32, dadurch gekennzeichnet, daß man Verbindungen der Formel (7), worin D als Substituenten Methyl, Äthyl, Methoxy, Benzoylamino, Amino, Ureido, Sulfomethyl, Hydroxy und Sulfo enthalten kann, als Ausgangsstoffe verwendet.

34. Verfahren gemäß Anspruch 26, zur Herstellung des Reaktivfarbstoffes der Formel

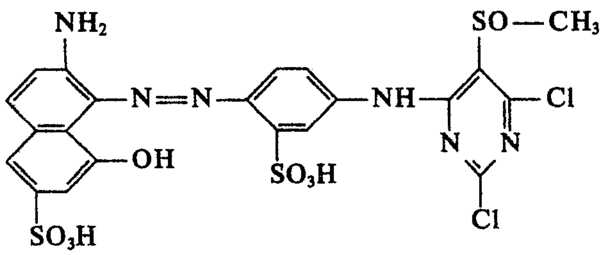

(6)

dadurch gekennzeichnet, daß man den durch Kupplung von diazotierter 1-Amino-4-acetylaminobenzol-6-sulfonsäure auf 2-Amino-8-hydroxynaphthalin-6-sulfonsäure und anschließende Verseifung der Acetlyaminogruppe erhaltenen Azofarbstoff mit 2,4,6-Trichlor-5-methylsulfinylpyrimidin kondensiert.

35. Verwendung der Reaktivfarbstoffe gemäß den Ansprüchen 1 bis 15 bzw. der gemäß den Ansprüchen 16 bis 34 erhaltenen Reaktivfarbstoffe zum Färben und Bedrucken.

36. Verwendung gemäß Anspruch 35 zum Färben von Cellulosefasern.

37. Färbe- bzw. Druckpräparate, die Farbstoffe gemäß den Ansprüchen 1 bis 15 enthalten.

38. Das gemäß Anspruch 35 oder 36 gefärbte oder bedruckte Material, insbesondere das Textilmaterial.

**Claims**

1. A reactive dye of the formula

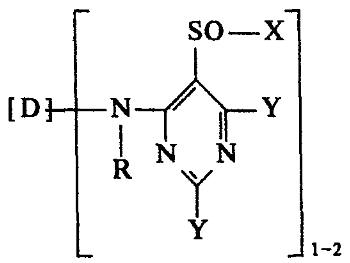

(1)

in which D is the radical of a dye, containing sulfo groups, of the monoazo, polyazo, metal complex azo, anthraquinone, phthalocyanine, formazan, azomethine, nitroaryl, dioxazine, phenazine or stilbene series, R is hydrogen or substituted or unsubstituted $C_1-C_4$-alkyl, X is $C_1-C_4$-alkyl and one radical Y is fluorine, chlorine or bromine and the other radical Y is fluorine, chlorine, bromine or an amino, alkoxy, aryloxy, alkylthio or arylthio radical, which radicals may be substituted or unsubstituted.

2. A reactive dye according to claim 1 in which D, R and X are as defined in claim 1 and both radicals Y are chlorine atoms.

3. A reactive dye according to claim 1, of the formula

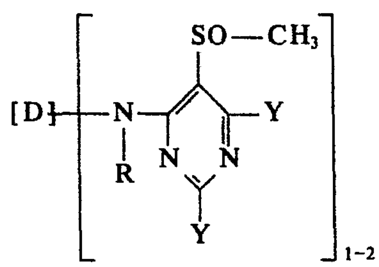

(2)

in which D, R and Y are as defined in claim 1.

4. A reactiv dye according to claim 3, in which D and R are as defined in claim 3 and both radicals Y are chlorine atoms.

5. A reactive dye according to claim 3, in which D is the radical of a monoazo or disazo dye.

6. A reactive dye according to claim 3, in which D is the radical of a metal complex azo dye or formazan dye.

7. A reactive dye according to claim 4, of the formula

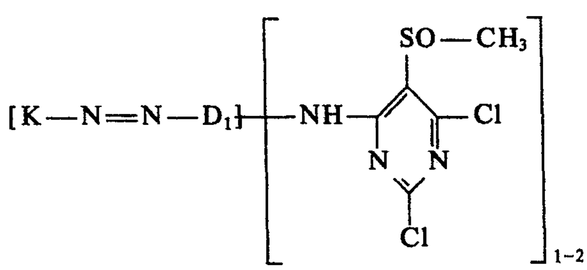

(3)

in which $D_1$ is the radical of a diazo component of the benzene or naphthalene series and K is the radical of a coupling component of the benzene or naphthalene series or of the heterocyclic series, and the reactive radical is bonded to the diazo component or to the coupling component, or the diazo component and the coupling component each carry one reactive radical.

8. A reactive dye according to claim 6, in which D is the radical of a metal complex azo dye of the benzene or naphthalene series.

9. A reactive dye according to claim 8, in which the radical D is a 1 : 1 copper complex azo dye, and the copper atom is bonded in each case to a metallisable group in the ortho-position relative to the azo bridge.

10. A reactive dye according to claim 1, of the formula

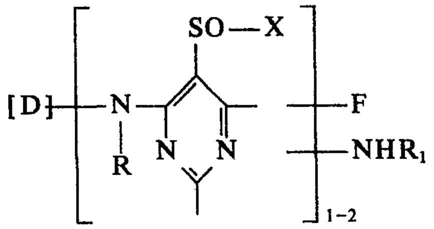

(4)

in which D, R, and X are as defined in claim 1 and $R_1$ is hydrogen or substituted or unsubstituted alkyl, cycloalkyl, aralkyl or aryl.

11. A reactive dye according to claim 10, in which D is the radical of a monoazo or disazo dye.

12. A reactive dye according to claim 11, of the formula

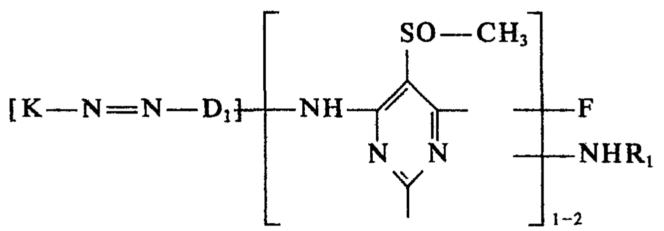

(5)

in which $D_1$ is the radical of a diazo component of the benzene or naphthalene series, K is the radical of a coupling component of the benzene or naphthalene series or of the heterocyclic series an $R_1$ is hydrogen or substituted or unsubstituted alkyl, cycloalkyl, arakyl or aryl, and the reactive radical is bonded to the diazo component or the coupling component or the diazo component and the coupling component each carry one reactive radical.

13. A reactive dye according to claims 5 and 11, in which the radical D can contain, as substituents, alkyl having 1 to 4 carbon atoms, alkoxy having 1 to 4 carbon atoms, acylamino having 1 to 6 carbon atoms, amino, alkoxycarbonyl, nitro, cyano, acetyl, trifluormethyl, halogen, sulfamoyl, carbamoyl, ureido, hydroxyl, carboxyl, sulfomethyl and sulfo.

14. A reactive dye according to claim 13, in which the radical D can contain, as substituents, methyl, ethyl, methoxy, benzoylamino, amino, ureido, sulfomethyl, hydroxyl and sulfo.

15. The reactive dye according to claim 7, of the formula

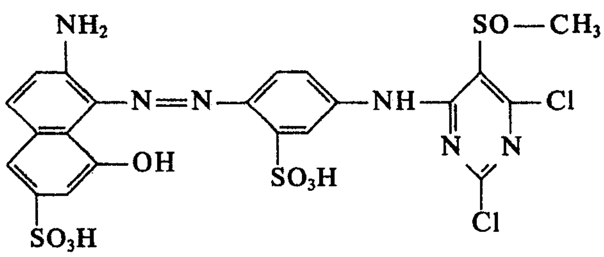

(6)

16. A process for the preparation of a reactive dye of the formula

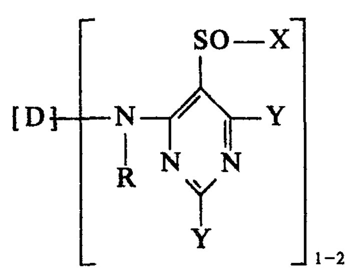

(1)

in which D is the radical of a dye, containing sulfo groups, of the monoazo, polyazo, metal complex azo, anthraquinone, phthalocyanine, formazan, azomethine, nitroaryl, diosazine, phenazine or stilbene series, R is hydrogen or substituted or unsubstituted $C_1-C_4$-alkyl, X is $C_1-C_4$-alkyl and one radical Y is fluorine, chlorine or bromine and the other radical Y is fluorine, chlorine, bromine or an amino, alkoxy, aryloxy, alkylthio or aryltio radical, which radicals may be substituted or unsubstituted, which process comprises condensing an organic dye of the formula

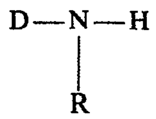

(7)

or a dye precursor with at least one equivalent of a compound of the formula

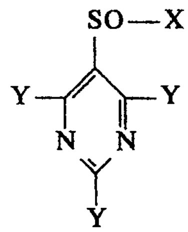

(8)

in which formulae (7) and (8) above D, R, X and Y are as defined for formula (1), and, if all the three radicals Y in formula (8) are fluorine, chlorine or bromine, if desired with an amine, an alcohol, an aromatic hydroxy compound or an alkyl- or aryl-mercaptan to give a reactive dye of the formula (1), and, if a dye precursor is used, converting said precursor into the desired final dye.

17. A process according to claim 16 for the preparation of a reactive dye of the formula (1), which comprises condensing a component of the dye of the formula (7) which contains a

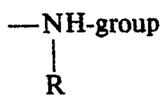

a compound of the formula (8) and, if desired, an amine, an alcohol, an aromatic hydroxy compound or an alkyl- or aryl-mercaptan, and carrying out the reaction with the other component of the dye of the formula (7) in any stage of the process.

18. A process according to claim 16 for the preparation of a reactive dye of the formula (1) in which D, R, and X are as defined in claim 16, wherein a compound of the formula (8) in which all three radicals Y are chlorine atoms is used as starting material.

19. A process according to claim 16 for the preparation of a reactive dye of the formula

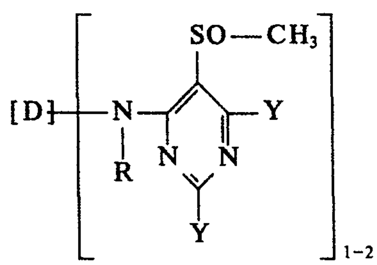

(2)

in which D, R and Y are as defined in claim 16, which comprises condensing an organic dye of the formula (7) with at least one equivalent of a compound of the formula

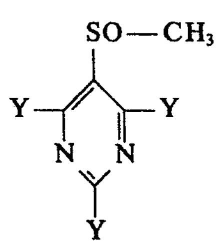

(9)

in which Y is as defined in claim 16, and, if all three radicals Y are fluorine, chlorine or bromine, if desired with an amine, an alcohol, an aromatic hydroxy compound or an alkyl- or arylmercaptan.

20. A process according to claim 19, which comprises condensing an organic dye of the formula (7), in which D and R are as defined in claim 19, is with a compound of the formula

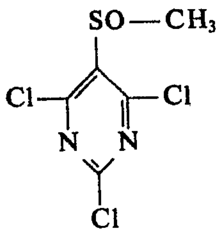

(10)

21. A process according to claim 19, wherein a compound of the formula (7) in which D is the radical of a monoazo or disazo dye is used as starting material.

22. A process according to claim 17, which comprises condensing a diazo of the dye which contains a

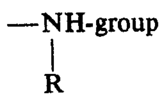

with a compound of the formula (8) in which two of the radicals Y are fluorine, chlorine or bromine and the third radical Y is fluorine, chlorine, bromine or substituted or unsubstituted amino, alkoxy, aryloxy, alkylthio or arylthio, diazotising the resulting condensation product and coupling the diazo compound to a coupling component.

23. A process according to claim 17, which comprises condensing a coupling component of the dye which contains a

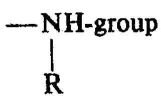

with a compound of the formula (8) in which two of the radicals Y are fluorine, chlorine or bromine and the third radical Y is fluorine, chlorine, bromine or substituted or unsubstituted amino, alkoxy, aryloxy, alkylthio or arylthio, and coupling the resulting condensation product to a diazotides diazo component.

24. A process according to claim 17, which comprises condensing a diazo component which contains a

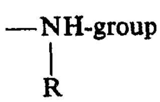

with a compound of the formula (8) in which two of the radicals Y are fluorine, chlorine or bromine and the third radical Y is fluorine, chlorine, bromine or substituted or unsubstituted amino, alkoxy, aryloxy, alkylthio or arylthio, and furthermore subjecting a coupling component which contains a

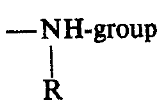

to condensation with a compound of the formula (8) in which two of the radicals Y are fluorine, chlorine or bromine and the third radical Y is fluorine, chlorine, bromine or substituted or unsubstituted amino, alkoxy, aryloxy, alkythio or arylthio, diazotising the condensation product of the diazo component and coupling the diazo compound to the condensation product of the coupling, R and Y in the condensation product of the diazo component being independent of R and Y in the condensation product of the coupling component.

25. A process according to claim 19, wherein a compound of the formula (7) in which D is the radical of a metal complex azo dye or formazan dye is used as the starting material.

26. A process according to claim 21, which comprises condensing an organic dye of the formula

$$[K-N=N-D_1]-[NH_2]_{1-2} \qquad (11)$$

in which $D_1$ is the radical of a diazo component of the benzene or naphthalene series an K is the radical of a coupling component of the benzene or naphthalene series or of the heterocyclic series with the compound of the formula (10), such that the condensation takes place at the $NH_2$ group of the diazo component or at the $NH_2$ group of the coupling component, or with two compound of the formula (10) such that the condensation takes place at the $NH_2$ group of the diazo component and at the $NH_2$ group of the coupling component.

27. A process according to claim 25, for the preparation of a reactive metal complex azo dye, which comprises reacting, in any order, a compound of the formula (7), wherein D is the radical of an azo dye of the benzene or naphthalene series, which compound contains metallisable groups in the ortho-position relative to the azo bridge, with a compound of the formula (9), wherein two of the radicals Y are fluorine, chlorine, or bromine and the third radical Y is fluorine, chlorine, bromine or substituted or unsubstituted amino, alkoxy, aryloxy, alkythio or arylthio, and with a heavy metal donor.

28. A process accoridng to claim 27, which comprises reacting a monoazo dye of the benzene or naphthalene series which contains metalliable groups in the ortho-position relative to the azo bridge with a compound of the formula (10) and with a copper donor, in any order, to give a 1 : 1 copper complex azo dye.

29. A process according to claim 16 for the preparation of a reactive dye of the formula

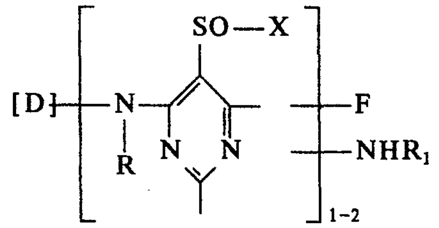

(4)

in which D, R an X are defined in claim 16 and $R_1$ is hydrogen or substituted or unsubstituted alkyl, cycloalkyl, aralkyl or aryl, which comprises reacting, in any order, an organic dye of the formula

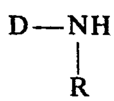

(7)

or a dye precursor, a compound of the formula

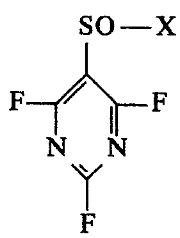

(12)

and an amine of the formula

$H_2N-R_1$ (13)

with one another and, if a dye precursor is used, converting said precursor into the desired final dye.

30. A process according to claim 29, wherein a compound of the formula (7), in which D is the radical of a monoazo or disazo dye is used as starting material.

31. A process according to claim 30 for the preparation of a reactive dye of the formula

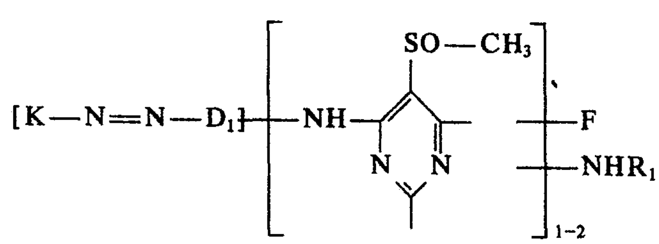

(5)

wherein $D_1$ is the radical of a diazo component of the benzene or naphthalene series, K is the radical of a coupling component of the benzene or naphthalene series or of the heterocyclic series an $R_1$ is hydrogen or substituted or unsubstituted alkyl, cycloalkyl, aralkyl or aryl, and the reactive radical is bonded to the diazo component or to the coupling component, or the diazo component and the coupling component each carry one reactive radical.

32. A process according to either of claims 21 or 30, wherein a compound of the formula (7) in which D can contain, as substituents, alkyl having 1 to 4 carbon atoms, alkoxy having 1 to 4 carbon atoms, acylamino having 1 to 6 carbon atoms, amino, alkoxycarbonyl, nitro, cyano, acetyl, trifluoromethyl,

halogen, sulfamoyl, carbamoyl, ureido, hydroxyl, carboxyl, sulfomethyl, and sulfo, is used as starting material.

33. A process according to claim 32, wherein a compound of the formula (7) in which D can contain, as substituents, methyl, ethyl, methoxy, benzoylamino, amino, ureido, sulfomathyl, hydroxyl, and sulfo, is used as starting material.

34. A process according to claim 26 for the preparation of the reactive dye of the formula

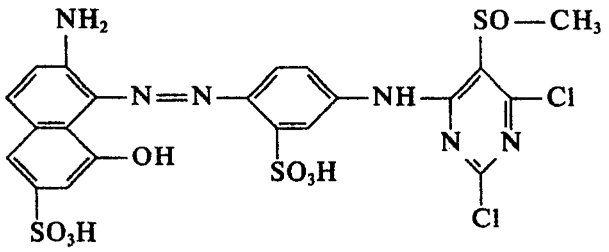

(6)

which comprises condensing the azo dye obtained by coupling diazotised 1-amino-4-acetylaminobenzene-6-sulfonic acid to 2-amino-hydroxynaphthalene-6-sulfonic acid and subsequently saponifying the acetylamino group, with 2, 4, 6-trichloro-5-methylsulfinylpyrimidine.

35. The use of a reactive dye according to any of claims 1 to 15 or of a reacitve dye obtained according to any of claims 16 to 34 for dyeing and printing.

36. The use according to claim 35 for dyeing cellulose fibres.

37. A dyeing or printing composition which contains a dye according to any claims 1 to 15.

38. The material in particular the textile material, dyed or printed according to claim 35 or 36.

**Revendications**

1. Colorants réactifs de formule

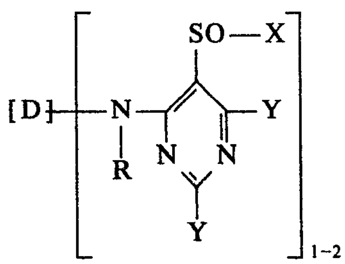

(1)

dans laquelle D est le reste d'un colorant contenant des groupes sulfo de la série mono-azoïque ou polyazoïque, azoïque à complexe métallifère, anthraquinonique, phtalocyanine, formazane, azométhinique, nitroarylique, dioxazinique, phénazinique ou stilbénique; R est de l'hydrogène ou un groupe alkyle en $C_1-C_4$ éventuellement substitué; X est un groupe alkyle en $C_1-C_4$; un Y est un atome de fluor, de chlore ou de brome et l'autre Y est un atome de fluor, de chlore, de brome ou un reste amino, alcoxy, aryloxy, alkylthio ou arylthio, les restes mentionnés étant éventuellement substitués.

2. Colorants réactifs selon la revendication 1, dans lesquels D, R et X ont les significations données dans la revendication 1, et les deux Y sont des atomes de chlore.

3. Colorants réactifs selon la revendication 1, ayant la formule

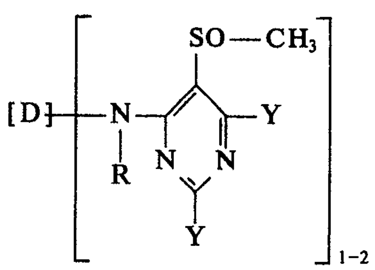

(2)

dans laquelle D, R et Y ont les significations données dans la revendication 1.

4. Colorants réactifs selon la revendication 3, dans lesquels D et R ont les significations données dans la revendication 3, et les deux Y sont des atomes de chlore.

5. Colorants réactifs selon la revendication 3, dans lesquels D est le reste d'un colorant mono-azoïque ou disazoïque.

6. Colorants réactifs selon la revendication 3, dans lesquels D est le reste d'un colorant azoïque à complexe métallifère ou d'un colorant de formazane à complexe métallifère.

7. Colorants réactifs selon la revendication 4 de formule

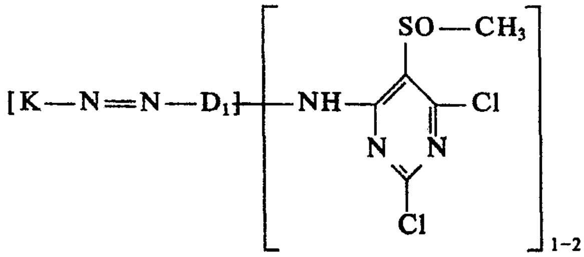

(3)

dans laquelle $D_1$ est le reste d'un composant diazo de la série benzénique ou naphtalénique, et K est le reste d'un constituant de copulation de la série benzénique ou naphtalénique ou bien de la série hétérocyclique, et le reste réactif est lié au composant diazo ou au constituant de copulation, ou bien un reste réactif est lié au composant diazo et un autre est lié au constituant de copulation.

8. Colorants réactifs selon la revendication 6, dans lesquels D est le reste d'un colorant azoïque à complexe métallifère de la série benzénique ou naphtalénique.

9. Colorants réactifs selon la revendication 8, dans lesquels le reste D est un colorant azoïque à complexe cuprifère 1 : 1, et l'atome de cuivre est lié chaque fois à un groupe métallisable en position ortho par rapport au pont azoïque.

10. Colorants réactifs selon la revendication 1, de formule

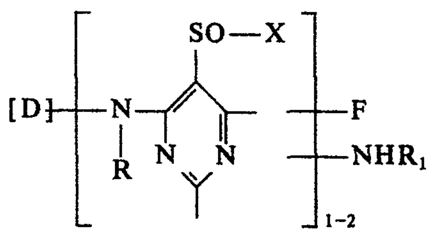

(4)

dans laquelle D, R et X ont les significations données dans la revendication 1, et $R_1$ est de l'hydrogène ou un reste alkyle, cycloalkyle, aralkyle ou aryle, éventuellement substitué.

11. Colorants réactifs selon la revendication 10, dans lesquels D est le reste d'un colorant mono-azoïque ou disazoïque.

12. Colorants réactifs selon la revendication 11, de formule

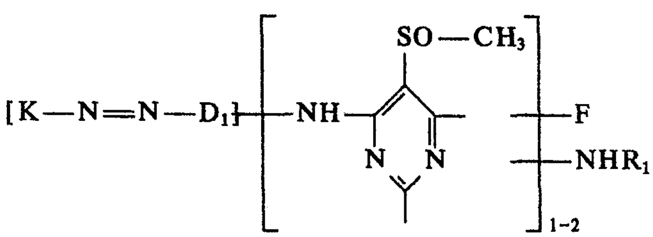

(5)

dans laquelle $D_1$ est le reste d'un composant diazo de la série benzénique ou naphtalénique, et K est le reste d'un constituant de copulation de la série benzénique ou naphtalénique ou bien de la série hétérocyclique, et $R_1$ est de l'hydrogène ou un reste alkyle, cycloalkyle, aralkyle ou aryle, éventuellement substitué, et le reste réactif est lié au composant diazo ou au constituant de copulation ou bien un reste réactif est lié au composant diazo et un autre au composant de copulation.

13. Colorants réactifs selon les revendications 5 et 11, dans lesquels le reste D peut contenir comme substituants des groupes alkyle ayant 1 à 4 atomes de carbone, alcoxy ayant 1 à 4 atomes de carbone, acylamino ayant 1 à 6 atomes de carbone, amino, alcoxycarbonyle, nitro, cyano, acétyle, trifluorométhyle, halogéno, sulfamoyle, carbamoyle, uréido, hydroxyle, carboxyle, sulfométhyle et sulfo.

14. Colorants réactifs selon la revendication 13, dans lesquels le reste D peut contenir comme substituants des groupes méthyle, éthyle, méthoxy, benzoylamino, amino, uréido, sulfométhyle, hydroxyle et sulfo.

15. Le colorant réactif selon la revendication 7, ayant la formule

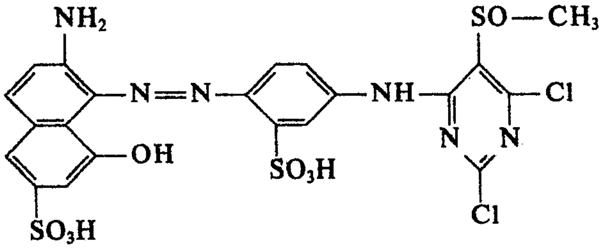

(6)

16. Procédé pour la préparation de colorants réactifs de formule

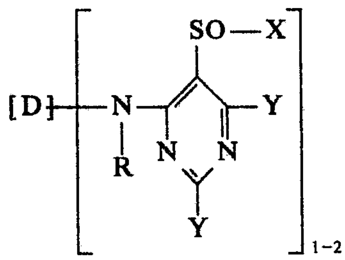

(1)

dans laquelle D est le reste d'un colorant contenant des groupes sulfo de la série mono-azoïque ou polyazoïque, azoïque à complexe métallifère, anthraquinonique, phtalocyanine, formazane, azométhinique, nitroarylique, dioxazinique, phénazinique ou stilbénique; R est de l'hydrogène ou un reste alkyle en $C_1—C_4$ éventuellement substitué; X est un reste alkyle en $C_1—C_4$; un Y est un atome de fluor, de chlore ou de brome, et l'autre Y est un atome de chlore, de fluor, de brome ou un reste amino, alcoxy, aryloxy, alkylthio ou arylthio; les restes mentionnés étant éventuellement substitué caractérisé par le fait qu'on condense des colorants organique de formule

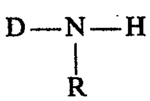

(7)

ou des précurseurs de colorant, avec au moins un équivalent d'un composé de formule

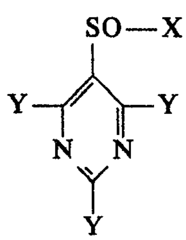

(8)

D, R, X et Y dans les formules (7) et (8) ayant les significations mentionnées sous la formule (1) et, dans le cas où les trois Y de la formule (8) sont des atomes de fluor, de chlore ou de brome, éventuellement avec une amine, un alcool, un composé hydroxylé aromatique, un alkylmercaptan ou un arylmercaptan, pour avoir un colorant réactif de formule (1), et que, dans le cas où on utilise des précurseurs de colorant, on transforme ces derniers en les colorants définitifs souhaités.

17. Procédé selon la revendication 16, pour la préparation de colorants réactifs de formule (1), caractérisé par le fait qu'on condense un composant de colorant de formule (7) qui contient un groupe

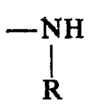

un composé de formule (8) et éventuellement une amine, un alcool, un composé hydroxylé aromatique, un alkylmercaptan ou un arylmercaptan, puis que, dans un stade quelconque du procédé, on fait réagir avec l'autre composant du colorant de formule (7).

18. Procédé selon la revendication 16, pour la préparation de colorants réactifs de formule (1), dans lesquels D, R et X ont les significations données dans la revendication 16, caractérisé par le fait qu'on utilise comme matière de départ un composé de formule (8) dans lequel les trois Y sont des atomes de chlore.

19. Procédé selon la revendication 16, pour la préparation de colorants réactifs de formule

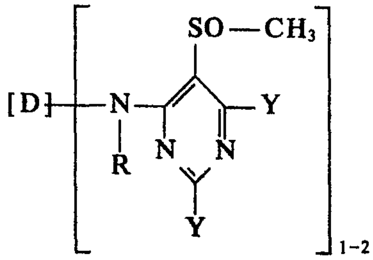 (2)

dans laquelle D, R et Y ont les significations données dans la revendication 16, caractérisé par le fait qu'on condense des colorants organiques de formule (7), avec au moins un équivalent d'un composé de formule

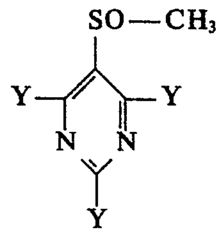 (9)

dans laquelle Y a les significations données dans la revendication 16, et éventuellement avec une amine, un alcool, un composé hydroxylé aromatique, un alkylmercaptan ou un arylmercaptan dans le cas où les trois Y sont des atomes de fluor, de chlore ou de brome.

20. Procédé selon la revendication 19, caractérisé par le fait qu'on condense des colorants organiques de formule (7), dans lesquels D et R ont les significations données dans la revendication 19, avec un composé de formule

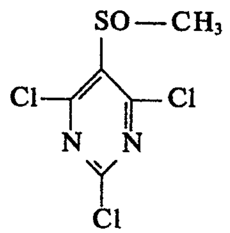 (10)

21. Procédé selon la revendication 19, caractérisé par le fait qu'on utilise comme matière de départ, des composés de formule (7), dans lesquels D est le reste d'un colorant mono-azoïque ou disazoïque.

22. Procédé selon la revendication 17, caractérisé par le fait qu'on condense un composant diazo du colorant, qui contient un groupe

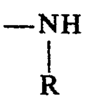

avec un composé de formule (8), dans lequel deux Y sont des atomes de fluor, de chlore ou de brome, et le troisième Y est un atome de fluor, de chlore, de brome, ou un groupe amino, alcoxy, aryloxy, alkylthio ou arylthio, éventuellement substitué, qu'on diazote le produit de condensation obtenu et qu'on copule sur un constituant de copulation.

23. Procédé selon la revendication 17, caractérisé par le fait qu'on condense un constituant de copulation du colorant, qui contient un groupe

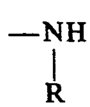

avec un composé de formule (8) dans lequel deux Y sont des atomes de fluor, de chlore ou de brome, et le troisième Y est un atome de fluor, de chlore, de brome ou un groupe amino, alcoxy, aryloxy, alkylthio ou arylthio, éventuellement substitué, et qu'on copule un composant diazo diazoté sur le produit de condensation ainsi obtenu.

24. Procédé selon la revendication 17, caractérisé par le fait qu'on condense un composant diazo, qui contient un groupe

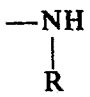

avec un composé de formule (8) dans lequel deux Y sont des atomes de fluor, de chlore ou de brome, et le troisième Y est un atome de fluor, de chlore, de brome ou un groupe amino, alcoxy, aryloxy, alkylthio ou arylthio, éventuellement substitué, qu'on condense en outre un constituant de copulation, qui contient un groupe

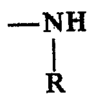

avec un composé de formule (8) dans lequel deux Y sont des atomes de fluor, de chlore ou de brome et le troisième Y est un atome de fluor, de chlore, de brome ou un groupe amino, alcoxy, aryloxy, alkylthio ou arylthio, éventuellement substitué, puis qu'on diazote le produit de condensation du composant diazo et qu'on copule sur le produit de condensation du constituant de copulation, R et Y dans le produit de condensation du composant diazo étant indépendant de R et de Y dans le produit de condensation du constituant de copulation.

25. Procédé selon la revendication 19, caractérisé par le fait qu'on utilise comme matières de départ, des composés de formule (7) dans lesquels D est le reste d'un colorant azoïque à complexe métallifère ou d'un colorant formazane à complexe métallifère.

26. Procédé selon la revendication 21, caractérisé par le fait qu'on condense des colorants organiques de formule

$$[K—N{=}N—D_1]\!\!-\!\![NH_2]_{1-2} \qquad (11)$$

dans lesquels $D_1$ est le reste d'un composant diazo de la série benzénique ou naphtalénique, et K est le reste d'un constituant de copulation de la série benzénique ou naphtalénique ou de la série hétérocyclique, avec un composé de formule (10), la condensation s'effectuant sur le groupe $NH_2$ du composant diazo ou sur le groupe $NH_2$ du constituant de copulation, ou bien qu'on condense avec deux composés de formule (10), la condensation s'effectuant sur le groupe $NH_2$ du composant diazo et sur le groupe $NH_2$ du constituant de copulation.

27. Procédé selon la revendication 25, pour la préparation de colorants azoïques à complexe métallifère réactifs, caractérisé par le fait qu'on fait réagir dans un ordre quelconque des composés de formule (7) dans lesquels D est le reste d'un colorant azoïque de la série benzénique ou naphtalénique, qui contient des groupes métallisables en position ortho par rapport au pont azoïque, avec un composé de formule (9) dans lequel deux Y sont des atomes de fluor, de chlore ou de brome et le troisième Y est un atome de fluor, de chlore, de brome ou un groupe amino, alcoxy, aryloxy, alkylthio ou arylthio, éventuellement substitué, puis avec des agents donnant des métaux lourds.

28. Procédé selon la revendication 27, caractérisé par le fait qu'on fait réagir un colorant mono-azoïque de la série benzénique ou naphtalénique, qui contient des groupes métallisables en position ortho par rapport au pont azoïque, avec un composé de formule (10) et avec des agents cédant du cuivre, dans un ordre quelconque, pour avoir un colorant azoïque à complexe cuprifère 1 : 1.

29. Procédé selon la revendication 16, pour la préparation de colorants réctifs de formule

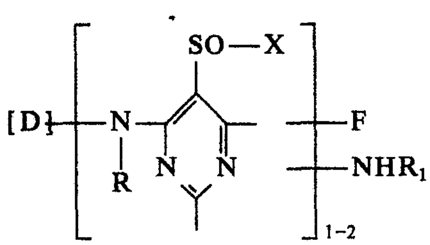 (4)

dans laquelle D, R et X ont les significations données dans la revendication 16, et $R_1$ est de l'hydrogène ou un reste alkyle, cycloalkyle, aralkyle ou aryle, éventuellement substitué, caractérisé par le fait qu'on fait réagir entre eux, dans un ordre quelconque, des colorants organiques de formule

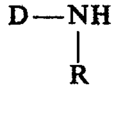 (7)

ou des précurseurs de colorant, des composés de formule

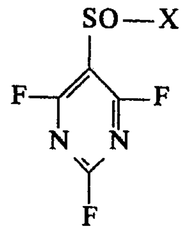

(12)

et des amines de formule

$H_2N-R_1$ (13)

et que, dans le cas où on utilise des précurseurs de colorant, on transforme ceux-ci en les colorants définitifs désirés.

30. Procédé selon la revendication 29, caractérisé par le fait qu'on utilise comme matières de départ, des composés de formule (7) dans lesquels D est le reste d'un colorant mono-azoïque ou disazoïque.

31. Procédé selon la revendication 30, pour la préparation de colorants réactifs de formule

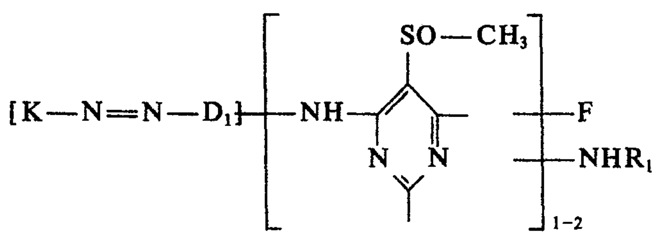

(5)

dans laquelle $D_1$ est le reste d'un composant diazo de la série benzénique ou naphtalémique, et K est le reste d'un constituant de copulation de la série benzénique ou naphtalénique ou bien de la série hétérocyclique; et $R_1$ est de l'hydrogène ou un reste alkyle, cycloalkyle, aralkyle ou aryle, éventuellement substitué, et dans laquelle le reste réactif est lié au composant diazo ou au constituant de copulation ou bien un reste réactif est lié au composant diazo et l'autre est lié au constituant de copulation.

32. Procédé selon les revendications 21 et 30, caractérisé par le fait qu'on utilise comme matières de départ, des composés de formule (7) dans lesquels D peut contenir comme substituants des groupes alkyle ayant 1 à 4 atomes de carbone, alcoxy ayant 1 à 4 atomes de carbone, acylamino ayant 1 à 6 atomes de carbone, amino, alcoxycarbonyle, nitro, cyano, acétyle, trifluorométhyle, halogéno, sulfamoyle, carbamoyle, uréido, hydroxyle, carboxyle, sulfométhyle et sulfo.

33. Procédé selon la revendication 32, caractérisé par le fait qu'on utilise comme matières de départ, des composés de formule (7) dans lesquels D peut contenir comme substituants des groupes méthyle, éthyle, méthoxy, benzoylamino, amino, uréido, sulfométhyle, hydroxyle et sulfo.

34. Procédé selon la revendication 26, pour la préparation du colorant réactif de formule

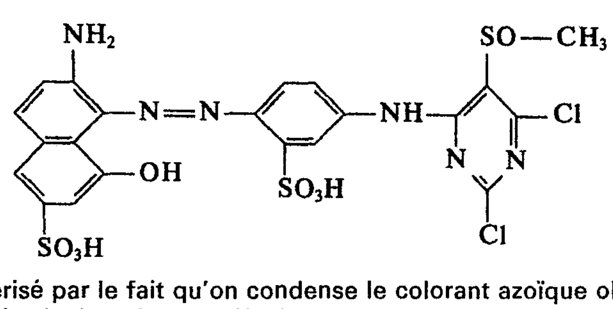

(6)

caractérisé par le fait qu'on condense le colorant azoïque obtenu par copulation de l'acide 1-amino-4-acétylaminobenzène-6-sulfonique diazoté sur l'acide 2-amino-8-hydroxynaphtalène-6-sulfonique puis par saponification du groupe acétylamino, avec la 2,4,6-trichloro-5-méthylsulfinylpyrimidine.

35. Utilisation des colorants réactifs selon les revendications 1 à 15 ou des colorants réactifs obtenus selon les revendications 16 à 34 pour la teinture et l'impression.

36. Utilisation selon la revendication 35, pour la teinture des fibres cellulosiques.

37. Préparation tinctoriale ou préparation pour impression qui contiennent les colorants selon les revendications 1 à 15.

38. La matière, en particulier la matière textile, teinte ou imprimée selon les revendications 35 ou 36.